# EUROPEAN PATENT APPLICATION

(11) **EP 4 831 813 A1**
(43) Date of publication of application: **28.10.2026**
(21) Application number: 24921444.6
(22) Date of filing: 14.09.2024
(51) Int. Cl.: G06F 11/34

(54) **PERFORMANCE ANALYSIS METHOD, APPLICATION METHOD, DEVICE, READABLE MEDIUM AND PROGRAM PRODUCT**

(30) Priority: 02.02.2024 CN 202410165481
(71) Applicant: Huawei Technologies Co., Ltd., Shenzhen, Guangdong 518129 (CN)
(72) Inventor: WANG, Ke, Shenzhen, Guangdong 518129 (CN); LIN, Yuheng, Shenzhen, Guangdong 518129 (CN); ZENG, Lingchang, Shenzhen, Guangdong 518129 (CN); CHEN, Jinglong, Shenzhen, Guangdong 518129 (CN)
(74) Representative: Huawei European IPR
(86) International application number: PCT/CN2024/119165
(87) International publication number: WO 2025/161419

(57) **Abstract**

This application relates to the field of computer technology, and in particular, to a performance analysis method, an application method, a device, a readable medium, and a program product. In the method, a plurality of pieces of execution information that can be converted into related performance metrics are collected during one execution of a target program. The plurality of pieces of execution information may include but is not limited to start time information and end time information of a target task, time information corresponding to a status switching moment of each target thread run by the target program, state information before and after switching, time information corresponding to a CPU frequency switching moment, frequency information before and after switching, and the like. Further, in the method, associated execution information within a target time period can be quickly identified in the collected execution information, and associated execution information that affects a same performance metric can be comprehensively analyzed and converted, thereby obtaining more accurate performance analysis results.

## Description

This application claims priority to Chinese Patent Application No. 202410165481.5, filed with the China National Intellectual Property Administration on February 2, 2024 and entitled "PERFORMANCE ANALYSIS METHOD, APPLICATION METHOD, DEVICE, READABLE MEDIUM, AND PROGRAM PRODUCT", which is incorporated herein by reference in its entirety.

### TECHNICAL FIELD

The present invention relates to the field of computer technology, and in particular, to a performance analysis method, an application method, a device, a readable medium, and a program product.

### BACKGROUND

With continuous development of computer technology, multi-core processing has been widely used to improve a processing and computing capability of electronic devices such as mobile phones and computers. A device that supports parallel processing by a plurality of central processing units (central processing units, CPUs) is usually integrated with a plurality of computing cores (cores), and supports simultaneous running of a plurality of applications (applications, APPs) installed on a mobile terminal. To improve user experience, developers usually use performance analysis tools to evaluate performance of programs or hardware devices such as CPUs of electronic devices. For example, during performance analysis and optimization on an application, program execution information may be collected and converted into performance metrics, for example, CPU usage or a CPU load, to measure program performance, and then program code may be optimized based on a magnitude of the performance evaluation metrics. In addition, in some hardware device test scenarios, the collected program execution information and the performance evaluation metrics obtained through conversion may also be used to analyze hardware capabilities of one or more CPUs in an electronic device. For example, the CPU load obtained by converting the program execution information is used to measure a load-handling capability of each CPU in the electronic device and an overall load-handling capability, load balancing performance, or the like of the electronic device based on the plurality of CPUs.

However, existing performance analysis tools collect program execution information in a relatively disorganized manner. The collection procedures for different types of program execution information are independent, and the collected program execution information lacks correlation. Therefore, the accuracy of performance analysis results provided by existing performance analysis tools is relatively low and flexibility of such tools is limited.

### SUMMARY

In view of this, this application provides a performance analysis method, an application method, a device, a readable medium, and a program product, so that associated execution information within a target time period can be quickly identified in collected execution information, and associated execution information that affects a same performance metric can be comprehensively analyzed and converted, to obtain a more accurate performance analysis result. Compared with other existing performance analysis solutions, this application has better flexibility, and supports user-defined instrumentation code, thereby increasing convenience in obtaining information in other dimensions. Information filtering can be completed during a procedure of collecting execution information in various dimensions, so that final collection results of execution data are centralized and accurate, with less redundant data. In addition, in this application, target program code does not need to be modified. Therefore, an original program is not affected, and corresponding development costs are low.

Specifically, according to a first aspect, this application provides a performance analysis method, applied to an electronic device. The method includes: detecting an analysis request that a user indicates to execute a first program to perform performance analysis; and displaying a performance analysis result in response to the analysis request. The performance analysis result is obtained based on execution information of the first program during a same execution, the execution information includes at least a plurality of pieces of time information related to a first task of the first program, and the performance analysis result includes a processor performance analysis result.

For example, the electronic device may be a device that can execute a target program and a performance analysis tool, for example, an electronic device like a mobile phone or a laptop computer described below. The first program that the user indicates to run may be the target program below. In embodiments of this application, the "user" may be a developer or referred to as an analyst in embodiments of this application. The analysis request may be a request of the user for operating, on an interface of the performance analysis tool run on the electronic device, to execute the target program to perform performance analysis. Correspondingly, the electronic device may collect, during a same execution of the target program (for example, the first program), a plurality of pieces of execution information related to the performance analysis result that the user needs to obtain.

Further, the electronic device may determine, based on each piece of time information in the plurality of pieces of execution information, at least one calculation interval corresponding to each of one or more target tasks of the target program, and then accurately calculate a CPU load in each calculation interval in which a target thread is in a run-related state. Finally, a CPU load corresponding to each target task can be accurately calculated, and a comprehensive CPU load of the target program can be further calculated, so as to obtain the performance analysis result.

It may be understood that, in the performance analysis method provided in this application, a task load calculated for each task of the target program is mainly represented as a CPU load. Therefore, the performance analysis result finally obtained according to the performance analysis method provided in this application may generally include a processor performance analysis result, and the processor performance analysis result may include, for example, a CPU load analysis result.

In a possible implementation of the first aspect, the electronic device includes one or more CPUs, the processor performance analysis result includes a CPU performance analysis result, and detecting the analysis request that the user indicates to execute the first program to perform performance analysis includes: detecting a first analysis request that the user indicates to execute the first program to perform performance analysis on the one or more CPUs; or detecting a second analysis request of the user for performing performance analysis on the first program.

For example, the performance analysis request performed by the user on the performance analysis tool run on the electronic device may be a performance analysis request, for example, the first analysis request, for the electronic device configured with the one or more CPUs (or a multi-core system), aiming to optimize balance between a CPU computational power and device power consumption to pursue high power consumption benefits, or may be a performance analysis request, for example, the second analysis request, for performing performance analysis on a target program developed or tested by a program developer.

In a possible implementation of the first aspect, the first program includes one or more tasks, the one or more tasks include the first task, and displaying the performance analysis result in response to the analysis request includes: determining at least one calculation interval used to calculate a first task load, where the first task load is a CPU load generated corresponding to the first task, and the performance analysis result is related to the first task load; determining duration corresponding to a calculation interval in which a first thread is in a run-related state in the at least one calculation interval, where the first thread is a thread that executes the first task; obtaining a computational power parameter corresponding to an operating frequency of a CPU in each calculation interval; and determining the first task load based on a quantity of the at least one calculation interval, the duration corresponding to the calculation interval in which the first thread is in the run-related state, and the computational power parameter corresponding to the operating frequency of the CPU in each calculation interval.

In a possible implementation of the first aspect, the plurality of pieces of time information related to the first task of the first program is used to determine start time and end time of each calculation interval. Determining the at least one calculation interval used to calculate the first task load includes: obtaining start time information and end time information of the first task in the at least one task of the first program; obtaining first time information corresponding to a switching moment of an activity status of the first thread in which the first task is located, where the activity status includes the run-related state; obtaining second time information corresponding to a switching moment of a frequency of a first CPU running the first thread; and determining, based on the start time information, the end time information, the first time information, and the second time information, the at least one calculation interval used to calculate the first task load.

In a possible implementation of the first aspect, the execution information of the first program during the same execution further includes activity status information of the first thread collected before and after the switching moment of the activity status, and the run-related state includes a running (running) state and/or a runnable (runnable) state.

In a possible implementation of the first aspect, determining the duration corresponding to the calculation interval in which the first thread is in the run-related state in the at least one calculation interval includes: determining first running duration corresponding to a first calculation interval in which the first thread is in the run-related state; and determining a quantity of first calculation intervals in which the first thread is in the run-related state.

In a possible implementation of the first aspect, the execution information of the first program during the same execution further includes frequency information of the first CPU collected before and after the switching moment of the frequency; and obtaining the computational power parameter corresponding to the operating frequency of the CPU in each calculation interval includes: obtaining first frequency information of the first CPU operating in the first calculation interval; determining a corresponding value of a first equivalent computational power based on a type of the first CPU and the first frequency information; and determining the value of the first equivalent computational power as a computational power parameter corresponding to an operating frequency of the first CPU in the first calculation interval.

In a possible implementation of the first aspect, determining the first task load based on the quantity of the at least one calculation interval, the duration corresponding to the calculation interval in which the first thread is in the run-related state, and the computational power parameter corresponding to the operating frequency of the CPU in each calculation interval includes: calculating, based on the first running duration and the value of the first equivalent computational power, a first CPU load corresponding to the first calculation interval; and performing cumulative calculation based on a first CPU load corresponding to each of one or more first calculation intervals in the at least one calculation interval, to obtain the first task load corresponding to the first task.

In a possible implementation of the first aspect, the one or more tasks further include a second task, and displaying the performance analysis result in response to the analysis request further includes: determining at least one calculation interval used to calculate a second task load, where the second task load is a CPU load generated corresponding to the second task; determining duration corresponding to a calculation interval in which a second thread is in a run-related state in the at least one calculation interval, where the second thread is a thread that executes the second task; obtaining a computational power parameter corresponding to an operating frequency of a CPU in each calculation interval; and determining the second task load based on a quantity of the at least one calculation interval, the duration corresponding to the calculation interval in which the second thread is in the run-related state, and the computational power parameter corresponding to the operating frequency of the CPU in each calculation interval.

In other words, the CPU load of the target program may be a combination of task loads (namely, CPU loads) corresponding to the tasks. The foregoing "combined calculation" manner may be an accumulation operation. For example, the task loads of the tasks, for example, the first task load and the second task load, are first separately calculated, and then the accumulation operation is performed on the CPU loads of the tasks, so that the accurate task load of the target program can be obtained through calculation.

It may be understood that, the task load of the target program obtained through calculation in combination with corresponding target time of the execution program or the tasks can accurately reflect performance of program code of the target program or performance of a CPU configured on the electronic device running the target program.

In a possible implementation of the first aspect, displaying the performance analysis result in response to the analysis request includes: in response to the first analysis request, performing combined calculation on the first task load and the second task load to obtain a total load corresponding to one or more CPUs currently operating in the electronic device, determining the total load as the processor performance analysis result, and displaying the processor performance analysis result.

For example, the total load corresponding to the one or more CPUs included in the processor performance analysis result may be a target program task load that is correspondingly generated in a procedure in which each CPU of the electronic device executes the target program, namely, CPU overheads obtained by performing combined calculation based on a plurality of task loads such as the first task load and the second task load. The processor performance analysis result may indicate the electronic device to increase or decrease an operating frequency of a corresponding CPU in a timely manner during an execution of one or more target programs, to correspondingly increase or decrease computational power supply, so as to optimize balance between a CPU computational power and device power consumption in a timely manner, and thereby pursue high power consumption benefits.

In a possible implementation of the first aspect, the performance analysis result includes a first program performance analysis result, and displaying the performance analysis result in response to the analysis request includes: in response to the second analysis request, generating the first program performance analysis result based on the first task load and the second task load, and displaying the first program performance analysis result.

For example, the first program performance analysis result may be a performance analysis result corresponding to the performance of the program code of the target program provided in this application. The performance analysis result may indicate whether a code optimization strategy like reducing program logic complexity or improving algorithm efficiency of the target program needs to be performed.

In a possible implementation of the first aspect, the start time information of the first task is obtained by collecting an execution result of a first instrumentation program, the end time information of the first task is obtained by collecting an execution result of a second instrumentation program, the electronic device executes the first instrumentation program according to a first control transfer instruction instrumented in the first program, and the electronic device executes the second instrumentation program according to a second control transfer instruction instrumented in the first program.

For example, the first control transfer instruction may be a control transfer instruction inserted at a task start point of the target task in a dynamic instrumentation-based tracing manner. When the control transfer instruction is executed by a CPU, the control transfer instruction may cause execution to jump to a corresponding instrumentation program (for example, the first instrumentation program), and execute and collect system time corresponding to the task start point as the start time information. The second control transfer instruction may be a control transfer instruction inserted at a task end point of the target task in a dynamic instrumentation manner. When the control transfer instruction is executed by the CPU, the control transfer instruction may cause execution to jump to a corresponding instrumentation program (for example, the second instrumentation program), and execute and collect system time corresponding to the task end point as the end time information.

In a possible implementation of the first aspect, the first time information corresponding to the switching moment of the activity status of the first thread is obtained by collecting an execution result of a third instrumentation program; and the electronic device executes the third instrumentation program according to a third control transfer instruction instrumented in application code/kernel code used to monitor the activity status of the first thread.

For example, the first time information may be time information corresponding to any switching moment of the activity status of the target thread, and is referred to as time information corresponding to a status switching moment below, for example, time information corresponding to a status switching moment ①, a status switching moment ②, a status switching moment ③, a status switching moment ④, and the like in the following examples. A control transfer instruction, for example, the third control transfer instruction, correspondingly triggering to execute the foregoing third instrumentation program to collect the time information corresponding to the status switching moments may be inserted into the application code/kernel code used to monitor the activity status of the target thread in a dynamic instrumentation-based tracing manner. In some embodiments, the application code/kernel code may be integrated into a thread status collection module 812, configured to collect time information corresponding to a switching moment of the activity status of the target thread, state information before and after the corresponding switching moment, and the like.

In a possible implementation of the first aspect, the second time information corresponding to the switching moment of the frequency of the first CPU is obtained by collecting an execution result of a fourth instrumentation program; and the electronic device executes the fourth instrumentation program according to a fourth control transfer instruction in application code/kernel code that is capable of listening to a frequency switching event of the first CPU.

For example, the second time information may be time information corresponding to a switching moment of an operating frequency of a CPU that runs the target thread at each moment in the electronic device, namely, time information corresponding to a frequency switching moment below, for example, time information corresponding to a frequency switching moment ①, a frequency switching moment ②, a frequency switching moment ③, a frequency switching moment ④, a frequency switching moment ⑤, and the like in the following examples. In some embodiments, the application code/kernel code may be integrated into a CPU frequency collection module 813, configured to collect time information corresponding to a CPU frequency switching moment and CPU frequency information before and after the corresponding switching moment.

According to a second aspect, this application provides a performance analysis method, applied to a first electronic device and a second electronic device. The method includes: The first electronic device detects an analysis request that a user indicates to execute a first program to perform performance analysis; the first electronic device sends, in response to the analysis request, an execution instruction corresponding to the first program to the second electronic device; the second electronic device runs the first program in response to the execution instruction; and the first electronic device displays a performance analysis result based on execution information collected by the second electronic device during a same execution of the first program. The performance analysis result is obtained based on the execution information of the first program during the same execution, the execution information includes at least a plurality of pieces of time information related to a first task of the first program, and the performance analysis result includes a processor performance analysis result.

For example, the first electronic device may be a device executing a performance analysis tool, for example, an electronic device like a laptop computer. The second electronic device may be a device executing a target program, for example, an electronic device like a mobile phone described below.

In a possible implementation of the second aspect, the first program includes one or more tasks, the one or more tasks include the first task, and that the first electronic device displays the performance analysis result based on the execution information collected by the second electronic device during the same execution of the first program includes: The first electronic device receives the execution information collected by the second electronic device, and determines, based on the execution information, at least one calculation interval used to calculate a first task load, where the first task load is a CPU load generated corresponding to the first task, and the performance analysis result is related to the first task load. The first electronic device determines duration corresponding to a calculation interval in which a first thread is in a run-related state in the at least one calculation interval, where the first thread is a thread that executes the first task. The first electronic device obtains a computational power parameter corresponding to an operating frequency of a CPU in each calculation interval. The first electronic device determines the first task load based on a quantity of the at least one calculation interval, the duration corresponding to the calculation interval in which the first thread is in the run-related state, and the computational power parameter corresponding to the operating frequency of the CPU in each calculation interval.

In a possible implementation of the second aspect, that the first electronic device determines, based on the execution information, the at least one calculation interval used to calculate the first task load includes: The first electronic device obtains start time information and end time information of the first task in the at least one task of the first program. The first electronic device obtains first time information corresponding to a switching moment of an activity status of the first thread in which the first task is located, where the activity status includes the run-related state. The first electronic device obtains second time information corresponding to a switching moment of a frequency of a first CPU running the first thread, where the first CPU is any one of one or more CPUs of the second electronic device. The first electronic device determines, based on the start time information, the end time information, the first time information, and the second time information, the at least one calculation interval used to calculate the first task load.

In a possible implementation of the second aspect, the execution information of the first program during the same execution further includes activity status information of the first thread collected before and after the switching moment of the activity status, and the run-related state includes a running (running) state and/or a runnable (runnable) state.

In a possible implementation of the second aspect, that the first electronic device determines the duration corresponding to the calculation interval in which the first thread is in the run-related state in the at least one calculation interval includes: The first electronic device determines first running duration corresponding to a first calculation interval in which the first thread is in the run-related state; and the first electronic device determines a quantity of first calculation intervals in which the first thread is in the run-related state.

In a possible implementation of the second aspect, the execution information of the first program during the same execution further includes frequency information of the first CPU collected before and after the switching moment of the frequency. That the first electronic device obtains the computational power parameter corresponding to the operating frequency of the CPU in each calculation interval includes: The first electronic device obtains first frequency information of the first CPU operating in the first calculation interval. The first electronic device obtains a corresponding value of a first equivalent computational power based on a type of the first CPU and the first frequency information. The first electronic device determines the value of the first equivalent computational power as a computational power parameter corresponding to an operating frequency of the first CPU in the first calculation interval.

In a possible implementation of the second aspect, that the first electronic device determines the first task load based on the quantity of the at least one calculation interval, the duration corresponding to the calculation interval in which the first thread is in the run-related state, and the computational power parameter corresponding to the operating frequency of the CPU in each calculation interval includes: The first electronic device calculates, based on the first running duration and the value of the first equivalent computational power, a first CPU load corresponding to the first calculation interval; and the first electronic device performs cumulative calculation based on a first CPU load corresponding to each of one or more first calculation intervals in the at least one calculation interval, to obtain the first task load corresponding to the first task.

In a possible implementation of the second aspect, the one or more tasks further include a second task, and that the first electronic device displays the performance analysis result based on the execution information collected by the second electronic device during the same execution of the first program includes: The first electronic device determines at least one calculation interval used to calculate a second task load, where the second task load is a CPU load generated corresponding to the second task. The first electronic device determines duration corresponding to a calculation interval in which a second thread is in a run-related state in the at least one calculation interval, where the second thread is a thread that executes the second task. The first electronic device obtains the computational power parameter corresponding to the operating frequency of the CPU in each calculation interval. The first electronic device determines the second task load based on a quantity of the at least one calculation interval, the duration corresponding to the calculation interval in which the second thread is in the run-related state, and the computational power parameter corresponding to the operating frequency of the CPU in each calculation interval. The first electronic device generates the performance analysis result based on the first task load and the second task load, and displays the performance analysis result.

According to a third aspect, this application provides a performance analysis result application method, applied to an electronic device. The electronic device includes a performance analysis tool, the performance analysis tool is configured to perform the performance analysis method provided in the first aspect and the possible implementations of the first aspect to obtain a performance analysis result, and the performance analysis result includes a CPU load analysis result corresponding to each of a plurality of programs running in a first time period. The method includes: establishing a first coordinate system, where a horizontal axis of the first coordinate system represents a task load, and a vertical axis of the first coordinate system represents a CPU computational power; determining a first reference line in the first coordinate system based on a maximum value of a screen frame rate of the electronic device, where a task load corresponding to a coordinate point on the first reference line and the CPU computational power provided by the electronic device meet a first balancing condition, and the first balancing condition is used to control the CPU computational power provided by the electronic device and power consumption of the electronic device to reach a balanced state; and determining a program optimization strategy for the plurality of programs based on a position relationship between a plotted point, in the first coordinate system, of the CPU load analysis result corresponding to each of the plurality of programs and the first reference line.

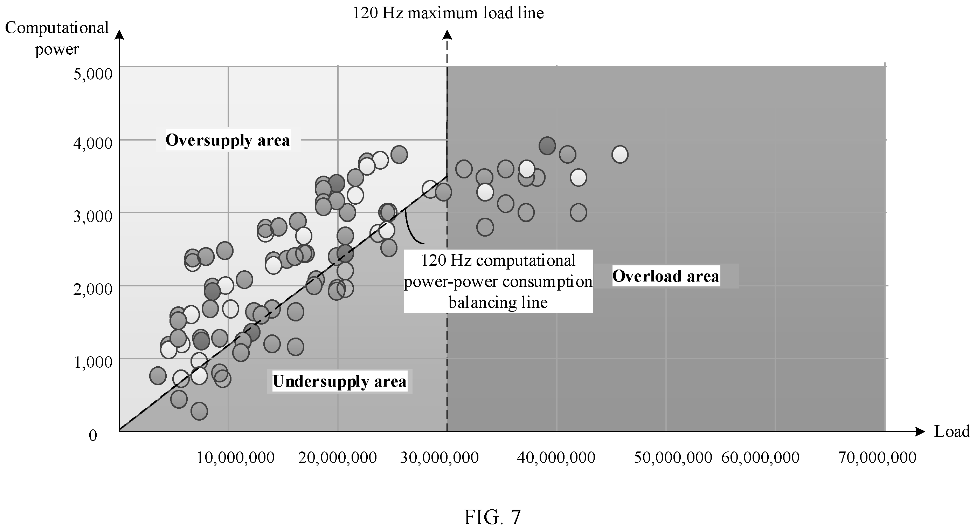

For example, the first coordinate system may be a computational power-load analysis coordinate system shown in FIG. 7 below.

Correspondingly, the first reference line may be a 120 Hz computational power-power consumption balancing line shown in FIG. 7 below. The foregoing position relationship between the plotted point, in the first coordinate system, of the CPU load analysis result corresponding to each of the plurality of programs and the first reference line may correspondingly include: The plotted point is located in an oversupply area above the 120 Hz computational power-power consumption balancing line, or the plotted point is located in an undersupply area below the 120 Hz computational power-power consumption balancing line. For a plotted point in the oversupply area, consideration is mainly given to how to obtain high power consumption benefits. CPU computational power supply may be decreased by decreasing an operating frequency of a CPU, that is, enabling the corresponding CPU to operate at a lower frequency, thereby improving energy efficiency or reducing power consumption. For a plotted point in the undersupply area, the CPU computational power supply may be increased by increasing the operating frequency of the CPU, that is, enabling the corresponding CPU to operate at a higher frequency, thereby shortening task execution time, and finally enabling a target task to be completed within target time. In some other embodiments, for a plotted point in the undersupply area, the CPU load may alternatively be reduced by reducing program logic complexity or improving algorithm efficiency, so that the target task can be completed within the target time.

In a possible implementation of the third aspect, the method further includes: determining a second reference line in the first coordinate system based on a maximum value of a task load that is supportable by the CPU computational power provided by the electronic device, where a task load corresponding to a coordinate point on the second reference line and the CPU computational power provided by the electronic device meet a second balancing condition, and the second balancing condition is used to control the CPU computational power provided by the electronic device and the maximum load that is supportable by the electronic device to reach a balanced state; and determining a program optimization strategy for the plurality of programs based on a position relationship between the plotted point, in the first coordinate system, of the CPU load analysis result corresponding to each of the plurality of programs and the second reference line.

For example, the second reference line may be a 120 Hz maximum load line shown in FIG. 7 below. Each coordinate point on the right side of the 120 Hz maximum load line, namely, the foregoing plotted point, is correspondingly in an overloaded area. In this case, the operating frequency of the corresponding CPU cannot be further increased, that is, the CPU computational power supply cannot be further increased. In this case, a load may be reduced by optimizing program code, for example, by reducing program logic complexity or improving algorithm efficiency, so that the target task can be completed within the target time.

In a possible implementation of the third aspect, the program optimization strategy for the plurality of programs includes at least one of the following: increasing operating frequencies of one or more CPUs executing a first program in the plurality of programs; decreasing the operating frequencies of the one or more CPUs running the first program in the plurality of programs; reducing program code logic complexity of the first program in the plurality of programs; and performing optimization on an algorithm related to the first program in the plurality of programs.

According to a fourth aspect, this application provides an electronic device, including one or more processors and one or more memories. The one or more memories store one or more programs, and when the one or more programs are executed by the one or more processors, the electronic device is enabled to perform the performance analysis method provided in the first aspect and the possible implementations of the first aspect, or the performance analysis result application method provided in the third aspect and the possible implementations of the third aspect.

According to a fifth aspect, this application provides a computer-readable medium. The readable medium stores instructions, and when the instructions are executed on a computer, the computer is enabled to perform the performance analysis method provided in the first aspect and the possible implementations of the first aspect, or the performance analysis result application method provided in the third aspect and the possible implementations of the third aspect.

According to a sixth aspect, this application provides a computer program product, including a computer program/instructions. When the computer program/instructions are executed by a processor, the performance analysis method provided in the first aspect and the possible implementations of the first aspect or the performance analysis result application method provided in the third aspect and the possible implementations of the third aspect is implemented.

For beneficial effect of the second aspect and the fourth aspect to the sixth aspect, refer to related descriptions in the first aspect and the possible implementations of the first aspect and the third aspect and the possible implementations of the third aspect. Details are not described herein again.

### BRIEF DESCRIPTION OF DRAWINGS

FIG. 1a(1) and FIG. 1a(2) are diagrams of a performance analysis scenario;
FIG. 1b is a diagram of comparison between different manners in which a performance analysis tool collects execution information;
FIG. 1c is a diagram of an implementation principle of a performance analysis method according to an embodiment of this application;
FIG. 2 is a diagram of an implementation principle of a dynamic instrumentation technology according to an embodiment of this application;
FIG. 3 is a diagram of an implementation principle of a static instrumentation technology;
FIG. 4 is a diagram of an implementation procedure of a performance analysis method according to an embodiment of this application;
FIG. 5 shows an example table of computational power parameters corresponding to different types of CPUs at different frequencies according to an embodiment of this application;
FIG. 6A and FIG. 6B are a diagram of an interaction procedure of a performance analysis method according to an embodiment of this application;
FIG. 7 is a diagram of computational power-load analysis coordinates established based on a performance analysis result according to an embodiment of this application;
FIG. 8 is a diagram of a software structure of a performance analysis tool according to an embodiment of this application;
FIG. 9 is a diagram of a hardware structure of an electronic device 100 according to an embodiment of this application; and
FIG. 10 is a diagram of a software structure of an operating system of an electronic device 100 according to an embodiment of this application.

### DESCRIPTION OF EMBODIMENTS

To make objectives, technical solutions, and advantages of embodiments of this application clearer, the following describes the technical solutions in embodiments of this application in detail with reference to accompanying drawings and specific implementations of the specification.

It may be understood that an electronic device in embodiments of this application may also be referred to as a terminal (terminal), a terminal device, user equipment (user equipment, UE), a mobile station (mobile station, MS), a mobile terminal (mobile terminal, MT), or the like. The terminal device may be a mobile phone (mobile phone), a tablet computer (Pad), a laptop computer, a wearable device, a computer with a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like.

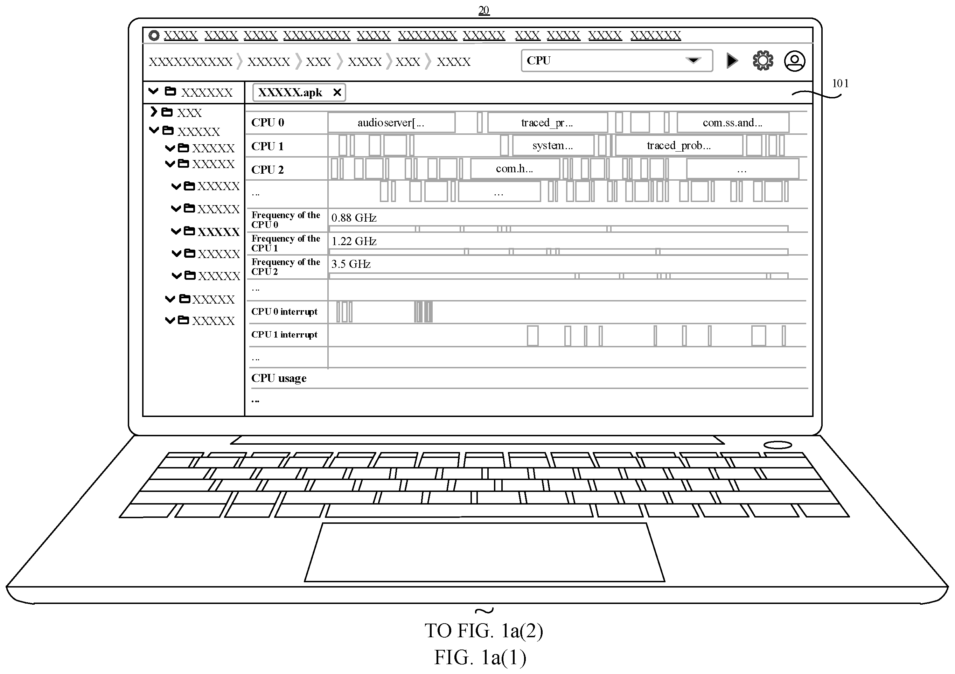

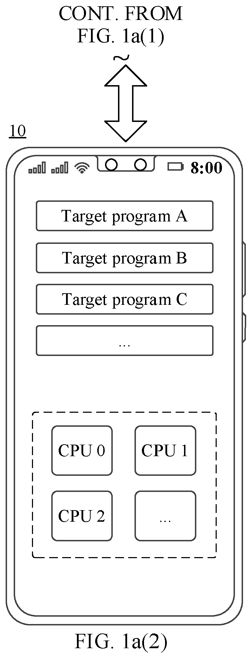

FIG. 1a(1) and FIG. 1a(2) are diagrams of a performance analysis scenario.

Refer to FIG. 1a(1) and FIG. 1a(2). The scenario may include a mobile phone 10 and a laptop computer 20. One or more applications on which performance analysis is to be performed may be installed on the mobile phone 10, and are referred to as target programs below. The laptop computer 20 may run a performance analysis tool, for example, an integrated development environment (integrated development environment, IDE). This is not limited herein.

Both the mobile phone 10 and the laptop computer 20 may be electronic devices that use a multi-core processing technology. For example, a multi-core processor of the mobile phone 10 may include a CPU 0, a CPU 1, a CPU 2, and the like. In another embodiment, the scenario to which the performance analysis method provided in embodiments of this application is applicable may include only a mobile phone, only a computer, or the like, or may include the terminal device like the tablet computer. This is not limited herein.

As described above, a developer usually uses the performance analysis tool to test performance of a program or performance of a CPU.

Still refer to FIG. 1a(1) and FIG. 1a(2). The laptop computer 20 may perform, by running the performance analysis tool, performance analysis on a target program on the mobile phone 10, and display a performance analysis result 101 shown in FIG. 1a(1) and FIG. 1a(2). The performance analysis result may include analysis of function execution statuses on CPUs, analysis of operating frequencies (frequencies, also referred to as frequencies below) of the CPUs, analysis of a CPU interrupt condition, CPU usage, and the like. The function execution statuses on the CPUs include, for example, functions "audioserver ()", "traced_prob ()", and "com.ss.and ()" executed on the CPU 0. The operating frequencies of the CPUs include, for example, a frequency of 0.88 GHz at which the CPU 0 operates, a frequency of 1.22 GHz at which the CPU 1 operates, and a frequency of 3.5 GHz at which the CPU 2 operates. The CPU interrupt condition includes, for example, a frequency, time, and interruption duration of CPU interrupts generated during program running. The foregoing performance analysis result 101 needs to depend on a plurality of pieces of collected program execution information (referred to as execution information for short below).

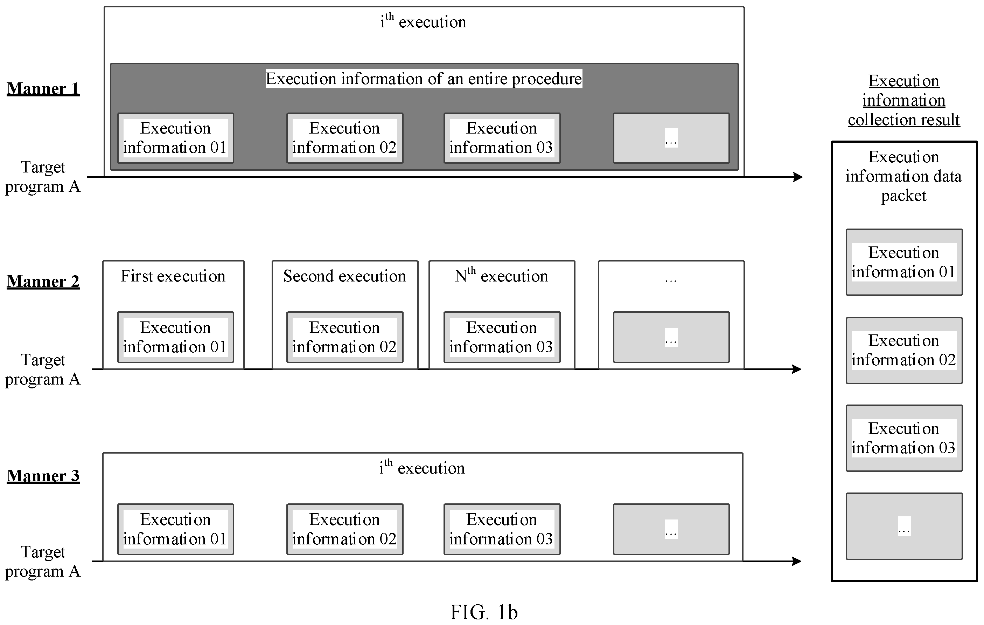

Refer to FIG. 1b. A manner in which a current performance analysis tool collects execution information may include Manner 1 and Manner 2.

Manner 1: tracing (trace) In this manner, all execution information (or referred to as execution data) generated in a procedure of executing a program in a period of time is recorded, and then execution information corresponding to a corresponding time period is identified in the execution information for performance analysis. For example, refer to FIG. 1b. During an execution (for example, an i^{th} execution) of a target program A, execution information of the entire procedure may be collected through tracing according to a trace (trace) command. Further, execution information 01, execution information 02, execution information 03, and the like required for performance analysis are obtained through filtering based on the execution information of the entire procedure collected through tracing, and finally, CPU usage and an activity status of each thread during an execution of an application (for example, the target program A) may be analyzed. In this manner, all information and events in all time periods can be captured. An advantage is that the collected execution data is accurate. However, a disadvantage is that additional collection overheads introduced by recording all the information and events in the collection procedure are high.

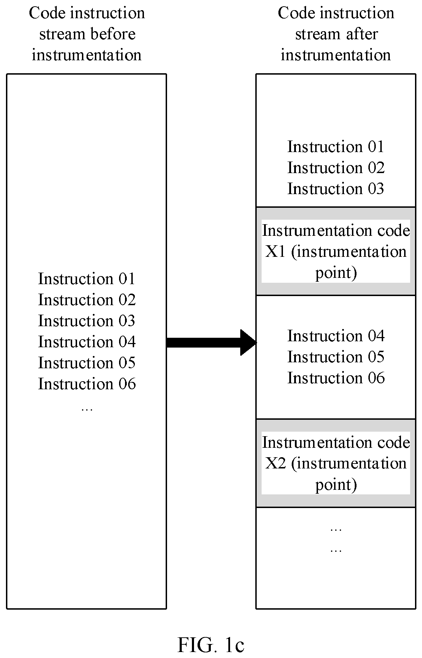

If the developer wants to analyze a task load or the like of a target task, the developer can only collect time information of a task start point and a task end point of the target task in a static instrumentation manner, so as to identify an execution time period of the target task. Static instrumentation is an instrumentation technology in which source code is modified in a program compilation phase, that is, instrumentation code is embedded into a target program in advance, and the target program is recompiled and generated. Refer to FIG. 1c. An instruction stream of the target program before instrumentation may include, for example, an instruction 01, an instruction 02, an instruction 03, an instruction 04, an instruction 05, and an instruction 06 in sequence. After a segment of instrumentation code is inserted into the target program by using the static instrumentation technology, for example, after instrumentation code X1 and instrumentation code X2 shown in FIG. 1c are inserted, an instruction stream included in a target program obtained through recompilation may include the instruction 01, the instruction 02, the instruction 03, the instrumentation code X1, the instruction 04, the instruction 05, the instruction 06, the instrumentation code X2, and the like. During running, the target program obtained through recompilation is loaded to memory space, and in a procedure in which code of the target program is loaded and executed by a CPU, the instrumentation code is executed to collect a piece of execution information that the instrumentation code indicates to collect.

Refer to FIG. 1c. If the target task starts to be executed from the instruction 04, when the target program is executed to the instrumentation code X1, system time at which execution of the instruction 03 is completed may be collected based on an execution result of the instrumentation code X1, and the system time is used as start time information of the target task. If the target task ends when execution of the instruction 06 is completed, when the target program is executed to the instrumentation code X2, system time at which execution of the instruction 06 is completed may be collected based on an execution result of the instrumentation code X2, and the system time is used as end time information of the target task.

However, the foregoing static instrumentation-based tracing manner still has the following disadvantages: First, a data collection point determined by using the static instrumentation technology is fixed and is not flexible enough. As a result, it is difficult to identify a to-be-analyzed target segment in an analysis procedure (unless instrumentation is completed in advance). Second, the execution data collected in the static instrumentation-based tracing manner is independent of each other and has weak correlation. In addition, redundant information may be collected at the same time, and the execution data still needs to be filtered. Otherwise, the execution data cannot be directly used for in-depth performance analysis. Third, static instrumentation causes modification and recompilation of the program code, and the procedure is complex. In addition, the procedure requires a developer or an analyzer to have sufficient understanding of the code. Even so, the entire procedure of implementing tracing based on static instrumentation still takes a large amount of time and is inefficient.

Manner 2: Sampling In this manner, data information is collected at a specific interval. In other words, in this manner, a plurality of pieces of execution information collected by the electronic device like the mobile phone 10 through sampling may be obtained during a plurality of executions of a same target program. Refer to FIG. 1b. For example, the execution information 01 is collected during a first execution of the target program A, that is, the execution information 01 is sampled during one execution. Similarly, the execution information 02 is collected during a second execution of the target program A, ..., the execution information 03 is collected during an N^{th} execution of the target program A, and so on. After the execution information is collected in the foregoing sampling manner, for example, running time of a function within a target time period, running time of a function on a CPU, and waiting time of the function not run on the CPU may be analyzed.

An advantage of the foregoing sampling manner is that overheads for obtaining execution information or execution data are low. However, a disadvantage is that the sampling manner requires a sufficient quantity of samples. Otherwise, a result may be inaccurate, and it is usually difficult to collect a plurality of pieces of required execution data through a single execution.

To resolve the foregoing problem, this application provides a performance analysis method. Specifically, in the method, a plurality of pieces of execution information that can be converted into related performance metrics are collected during one execution of a target program. The plurality of pieces of execution information may include but is not limited to start time information and end time information of a target task, time information corresponding to a status switching moment of each target thread run by the target program, state information before and after switching, time information corresponding to a CPU frequency switching moment, frequency information before and after switching, and the like. Further, in the method, associated execution information within a target time period can be quickly identified in the collected execution information, and associated execution information that affects a same performance metric can be comprehensively analyzed and converted, to obtain a more accurate performance analysis result. In other words, according to the performance analysis method provided in this application, low overheads and high efficiency of an execution information collection procedure can be considered, and accuracy of the performance analysis result can be improved.

For example, refer to Manner 3 shown in FIG. 1b. The electronic device like the mobile phone 10 may collect the execution information 01, the execution information 02, the execution information 03, and the like during the i^{th} execution of the target program A according to the performance analysis method provided in this application. In other words, the electronic device like the mobile phone 10 may collect, during one execution of a program according to the performance analysis method provided in this application, a plurality of pieces of execution information that can be converted into related performance metrics. Here, i may be a natural number like 1, 2, 3, ..., or N. In view of this, the laptop computer 20 or the mobile phone 10 may correspondingly convert the collected execution information 01, execution information 02, execution information 03, and the like into one or more performance metrics required by the developer.

The foregoing procedure of converting into the related performance metrics may include, for example, first comprehensively analyzing, based on the foregoing time information, at least one calculation interval corresponding to each of one or more target tasks of the target program, and then calculating a CPU load corresponding to a thread running the target tasks in each calculation interval, so that a CPU load corresponding to each target task can be accurately calculated, and a comprehensive CPU load of the target program can be further calculated. It may be understood that the CPU load may represent a size of a CPU resource actually occupied during an execution of each target program, and a CPU load corresponding to one or more target tasks included in each target program may also be referred to as a task load below.

When the CPU load in each calculation interval is calculated, the CPU load may be determined based on running duration of the target thread in the determined calculation interval and a magnitude of a computational power provided by a CPU running the target thread. The magnitude of the computational power provided by the CPU may be obtained through calculation based on a computational power parameter corresponding to a current operating frequency of the CPU. The computational power parameter may include, for example, an equivalent computational power. A magnitude of the equivalent computational power may be determined based on the current operating frequency (namely, a frequency) of the CPU and a type of the CPU. For a specific calculation manner, refer to descriptions in the following specific embodiments with reference to related accompanying drawings. Details are not described herein.

It may be understood that, in the plurality of pieces of execution information collected during the execution of the program, a part of the execution information may be execution information related to a process or a thread run in a system, for example, time information corresponding to a status switching moment of each target thread and state information before and after switching, and the other part may be execution information related to running information of the CPU, for example, time information corresponding to a frequency switching moment of the CPU and frequency information before and after switching. The different execution information may be replaced with a control transfer instruction at a specified instrumentation point during an execution of the target program, to trigger a jump to corresponding instrumentation code for execution and complete information collection. For example, during the execution of the target program, the CPU of the electronic device may execute the control transfer instruction added to related application code/kernel code, to jump to corresponding instrumentation code for execution and collect the time information corresponding to the status switching moment of each target thread and the state information before and after switching. For another example, during the execution of the target program, the CPU of the electronic device may further execute the control transfer instruction added to the target program, to jump to corresponding instrumentation code for execution and collect the start time information, the end time information, and the like of the target task.

In embodiments of this application, the control transfer instruction may include a jump instruction, a trap instruction, or the like. The jump instruction may trigger a jump to specified instrumentation code for execution. Generally, the jump instruction is used for a jump in same memory space, and no register switching occurs, thus requiring no context storing. The trap instruction is used for switching between different memory space, for example, from a user mode to a kernel mode. Context (for example, various registers and state information) first needs to be stored before a jump is performed, and the context is restored upon return.

It may be understood that the specified instrumentation point may be, for example, an instrumentation position that is preset by the developer based on an actual analysis requirement through the performance analysis tool before the target program is run. A presetting manner may be, for example, that when the electronic device runs the performance analysis tool, a code address or a function name of the instrumentation point of the program is found based on a binary file of the program, for example, an instruction address or a function name corresponding to a task start point or a task end point. In this way, in a procedure in which the electronic device loads and runs the target program by using the performance analysis tool, the electronic device may identify a corresponding instrumentation position based on the corresponding instruction address or function name, that is, identify the specified instrumentation point, and further replace an instruction at the specified instrumentation point with a control transfer instruction, to trigger a jump to execute the instrumentation code. In some embodiments, the tracing (trace) manner in which the control transfer instruction is added during the execution of the program to trigger execution of the instrumentation code may also be referred to as a dynamic instrumentation-based tracing manner or a manner of implementing tracing based on dynamic instrumentation.

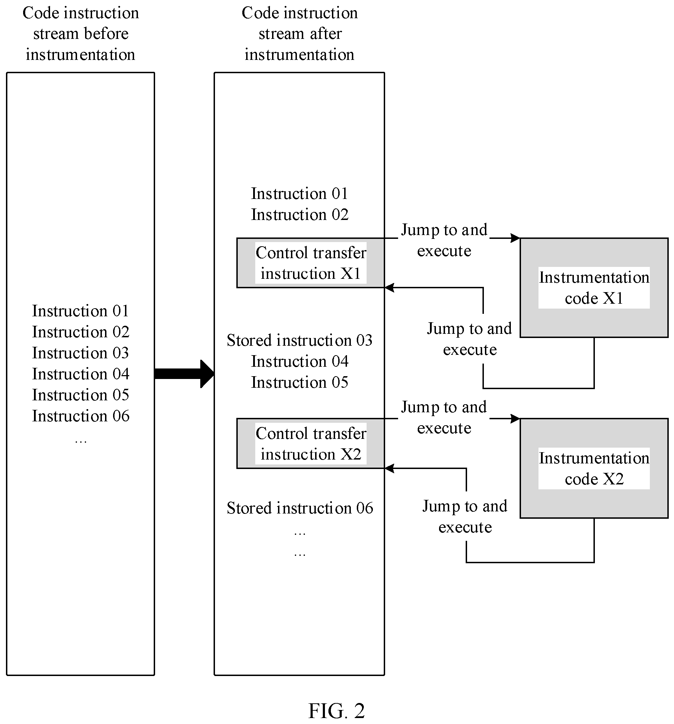

Refer to FIG. 2. An instruction stream of the target program before instrumentation may include, for example, an instruction 01, an instruction 02, an instruction 03, an instruction 04, an instruction 05, and an instruction 06 in sequence. In this application, a procedure of implementing tracing based on dynamic instrumentation may be as follows: After a code file (for example, an executable binary file) corresponding to the target program is loaded to corresponding memory space, a performance analysis tool run on a corresponding electronic device may perform instrumentation based on an instrumentation point in the target program indicated by a skilled person, namely, a specified instrumentation point, when loading the code file to prepare for executing the target program or after starting to execute the target program. The specified instrumentation point may be an instruction before a target task starts to be executed, for example, the instruction 03. Further, during an execution of the target program, the electronic device may replace the instruction at the instrumentation point with a control transfer instruction. The control transfer instruction includes, for example, a control transfer instruction X1 and a control transfer instruction X2 shown in FIG. 2. An instrumentation point correspondingly replaced with the control transfer instruction X1 may be an instruction before a task start point of the target task, for example, the instruction 03. An instruction at the task start point may be, for example, the instruction 04 shown in FIG. 2. Instrumentation code X1 to which the control transfer instruction X1 correspondingly jumps for execution may trigger collection of system time corresponding to the task start point, and use the system time as start time information of the target task.

Similarly, an instrumentation point correspondingly replaced with the control transfer instruction X2 may be an instruction following the task end point of the target task, for example, the instruction 06. An instruction at the task end point may be, for example, the instruction 05 shown in FIG. 2. Instrumentation code X2 to which the control transfer instruction X2 correspondingly jumps for execution may trigger collection of system time corresponding to the task end point, and use the system time as end time information of the target task.

It may be understood that the instrumentation code and the instruction stream of the target program may be executed in serial. In a procedure of jumping to instrumentation code for execution, an original instruction at a corresponding instrumentation point may be stored in corresponding memory space before execution. Further, after the instrumentation code is executed, a corresponding CPU may load the instruction stored before the instrumentation point and continue to execute the instruction and subsequent other instructions. For example, refer to FIG. 2. When the target program is executed to a corresponding control transfer instruction, the corresponding CPU of the electronic device may first store the instruction 03. After execution of the instrumentation code X1 to which the control transfer instruction triggers a jump is completed, the corresponding CPU may execute the stored instruction 03, and then continue to execute the instruction 04, the instruction 05, and the like. Similarly, when the target program is executed to a corresponding control transfer instruction, the corresponding CPU may first store the instruction 06 to the memory space. After execution of the instrumentation code X1 to which the control transfer instruction triggers a jump is completed, the corresponding CPU may execute the stored instruction 06 and subsequent other instructions.

In other words, based on the performance analysis method provided in this application, an execution sequence of the code instruction stream after instrumentation is performed in a dynamic instrumentation manner shown in FIG. 2 may be: executing the instruction 01 → executing the instruction 02 → executing the control transfer instruction X1 (in this case, the instruction 03 is stored) → jumping to and executing the instrumentation code X1 → executing the stored instruction 03 → executing the instruction 04 → executing the instruction 05 → executing the control transfer instruction X2 (in this case, the instruction 06 is stored) → jumping to and executing the instrumentation code X2 → executing the stored instruction 06.

It may be understood that, in the performance analysis method provided in this application, collecting the execution information in the foregoing dynamic instrumentation-based tracking manner may have the following advantages by comparison with the foregoing static instrumentation-based tracking manner: First, flexibility is better, and in the foregoing dynamic instrumentation-based tracing manner, an instrumentation point can be easily inserted, and required execution information can be easily collected. Second, in the foregoing dynamic instrumentation-based tracking manner, user-defined instrumentation code can be supported. Therefore, information in other dimensions can be obtained at any time in the collection procedure. For example, in a status switching procedure, a thread that is performing status switching can be viewed. In this procedure, only a collection thread may be focused on. Therefore, information filtering can be completed in a procedure of collecting execution information in each dimension, and finally, a collection result of the execution data is focused and accurate, with less redundant data. Third, the foregoing dynamic instrumentation does not require modification of target program code. Therefore, an original program is not affected, and a developer or an analyzer can implement instrumentation without having to know too many details of the code, resulting in low development costs.

It may be understood that, if a plurality of target tasks need to be executed during an execution of the target program, corresponding specified instrumentation points may be replaced with control transfer instructions at a task start point and a task end point of each target task, to trigger a jump to corresponding instrumentation code to collect start time information and end time information of the task.

In addition, during the execution of the target program shown in FIG. 2, the performance analysis tool run in the system of the electronic device may also correspondingly detect whether a control transfer instruction instrumented in related application code/kernel code enables a dynamic instrumentation jump, or whether a condition for executing dynamic instrumentation content (for example, the instrumentation code) is met. Further, when the execution condition is met, the electronic device may trigger, when executing the target program to the control transfer instruction (for example, the control transfer instruction X1 shown in FIG. 2), a jump to the corresponding instrumentation code (for example, the instrumentation code X1 shown in FIG. 2). This is not limited herein.

In conclusion, in the dynamic instrumentation manner shown in FIG. 2, the electronic device may collect start time information and end time information of the one or more target tasks of the target program. Similarly, the electronic device may also collect, in the dynamic instrumentation manner shown in FIG. 2, time information corresponding to a moment at which an activity status of a target thread in which the target program is located is switched, time information corresponding to a moment at which an operating frequency of the CPU running the target thread in the electronic device changes, and the like. Based on collection results of, for example, collection of the foregoing time information and collection of state information of the target thread and CPU frequency information described below that are implemented in the dynamic instrumentation manner, the electronic device may further complete analysis of performance metrics such as a CPU load, thereby implementing performance analysis of the target program or a hardware device like a CPU of the electronic device.

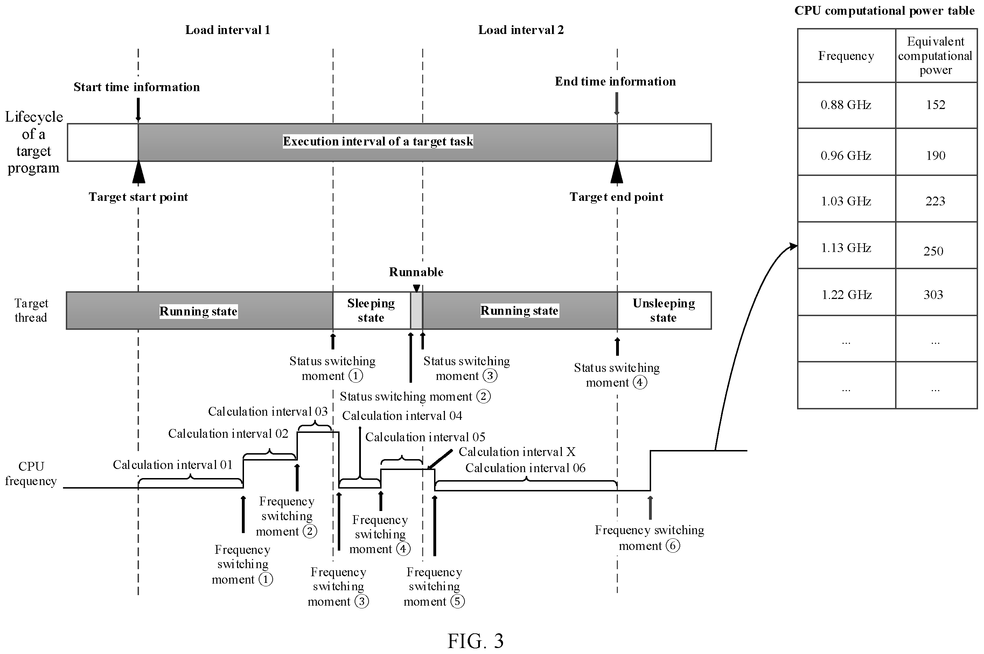

Specifically, refer to FIG. 3. During the execution of the target program, when the activity status of the target thread running the target program is switched, the system of the electronic device may jump to execute corresponding instrumentation code according to a control transfer instruction added to application code/kernel code for monitoring the activity status of the target thread, so as to collect system time corresponding to a switching moment as time information corresponding to the status switching moment, and record activity statuses of the target thread before and after the switch at that moment as collected state information.

It may be understood that the target task shown in FIG. 3 may be any one of one or more tasks executed in the target program, and the developer may set a task start point and a task end point of the target task as specified instrumentation points through the performance analysis tool. The target task starts running from the task start point and ends running at the task end point. A time period between end time information corresponding to the task end point and start time information corresponding to the task start point is a "target task execution interval" shown in FIG. 3. Before the task start point of the target task arrives, that is, before the target task is executed, the target thread may be in a running (running) state in which another task is being executed, or may be in a sleeping (sleeping) state or an unsleeping (unsleeping) state that is entered after a task is executed. In addition, when the target thread is in the sleeping state, the CPU of the electronic device may alternatively switch to a higher operating frequency because the CPU is running a thread of another program.

Refer to FIG. 3. Correspondingly switching the target thread activity status at the status switching moment may include, for example, switching from the running (running) state to the sleeping (sleeping) state, switching from the sleeping state to the runnable (runnable) state, and switching from the runnable state to the running state. Correspondingly, the status switching moment collected by the system may include, for example, a status switching moment ①, a status switching moment ②, a status switching moment ③, and a status switching moment ④ shown in FIG. 3.

Still refer to FIG. 3. During the execution of the target program, when a frequency of the CPU running the target thread changes (also referred to as a frequency switching moment), the system of the electronic device may jump, according to a control transfer instruction, to execute corresponding instrumentation code, collect system time corresponding to the switching moment as time information corresponding to the frequency switching moment, and record frequencies at which the CPU operates before and after the switch at that moment as collected frequency information. Refer to FIG. 3. The collected time information corresponding to the frequency switching moment may include time information corresponding to a CPU frequency switching moment ①, time information corresponding to a CPU frequency switching moment ②, time information corresponding to a CPU frequency switching moment ③, time information corresponding to a CPU frequency switching moment ④, time information corresponding to a frequency switching moment ⑤, time information corresponding to a frequency switching moment ⑥, and the like. Correspondingly, the frequency information collected at the frequency switching moments may include, for example, 0.88 GHz, 0.96 GHz, 1.03 GHz, 1.13 GHz, and 1.22 GHz shown in FIG. 3.

Based on the foregoing collected program execution information, the performance analysis tool run on the electronic device may first determine one or more calculation intervals used to calculate an evaluation metric like a CPU load, and then obtain, through accurate calculation based on duration in which the target thread is in a run-related state in each calculation interval and the like, a total task load during execution of the target program, namely, the CPU load. Based on the performance analysis method provided in this application, the electronic device may further obtain, through calculation, another performance metric, for example, one or more of CPU running duration, CPU usage, and execution information of a related function in the target program. This is not limited herein.

Refer to FIG. 3. A plurality of calculation intervals during execution of the target program may be comprehensively determined based on time information related to the task start point and the task end point of the target task in a lifecycle of the target program, time information corresponding to a changing moment (namely, the foregoing status switching moment) of an activity status of each target thread run by the target program during an execution, time information corresponding to a moment at which the frequency of the CPU is switched, and the like. For example, one or more calculation intervals of each target task may be determined based on a result of an intersection operation performed on time periods correspondingly formed by the foregoing time information.

Therefore, according to the performance analysis method provided in this application, based on the plurality of pieces of time information related to the target task that are collected in the foregoing dynamic instrumentation-based tracking manner, a time period in which the target task is executed can be more accurately identified, and an effective calculation interval used to calculate a target task load can be more accurately determined. In view of this, a performance analysis result finally obtained according to the performance analysis method provided in this application may also be more accurate.

Refer to FIG. 3. For example, based on the result of the intersection operation performed on the time periods correspondingly formed by the foregoing time information, it may be determined that start time of a calculation interval 01 may be start time information corresponding to a task start point, and end time may be time information corresponding to the frequency switching moment ① of the CPU. For another example, based on the result of the intersection operation performed on the time periods correspondingly formed by the foregoing time information, it may be determined that start time of a calculation interval 02 is time information corresponding to the CPU frequency switching moment ①, and end time may be time information corresponding to the CPU frequency switching moment ②. For another example, it may be further determined that start time of a calculation interval 03 is time information corresponding to the CPU frequency switching moment ②, and end time may be time information corresponding to the status switching moment ① of the corresponding target thread. It may be further determined that start time of a calculation interval 04 is time information corresponding to the CPU frequency switching moment ③, and end time may be time information corresponding to the CPU frequency switching moment ④. It may be further determined that start time of a calculation interval 05 is time information corresponding to the CPU frequency switching moment ④, and end time may be time information corresponding to the status switching moment ③. For another example, based on the result of the intersection operation performed on the time periods correspondingly formed by the foregoing time information, it may be further determined that start time of a calculation interval 06 may be time information corresponding to the CPU frequency switching moment ⑤, and end time may be end time information corresponding to the task end point in the lifecycle of the target program.

In some embodiments, the intersection operation may alternatively be performed based on some status switching moments of the target thread. For example, a status switching moment corresponding to switching from the sleeping state to the runnable state may not participate in the intersection operation, that is, may not be used as start time or end time of any one of the foregoing calculation intervals. Therefore, the end time of the calculation interval 05 shown in FIG. 3 may be determined based on time information corresponding to the status switching moment ③ at which the runnable state is switched to the running state. This is not limited herein. In addition, a calculation interval X may be further included between the calculation interval 05 and the calculation interval 06 shown in FIG. 3. Start time of the calculation interval X may be time information corresponding to the status switching moment ③, and end time may be time information corresponding to the frequency switching moment ⑤.

Still refer to FIG. 3. The target program may include one or more target tasks, and one or more calculation intervals may be determined for each target task according to the performance analysis method provided in this application. Any target thread status in each calculation interval may include a running (running) state, or may include a sleeping (sleeping) state, a runnable (runnable) state, or the like. When a CPU load of a target task is calculated, calculation may be completed with reference to the following formula (1): $Task load = {\sum }_{i = 0}^{quantity of calculation intervals} running duration \times equivalent computational power$ (1)

The "task load" indicates a total CPU load corresponding to each of target tasks executed on the CPU. The "quantity of calculation intervals" indicates a quantity of calculation intervals correspondingly determined in an execution interval of the target task according to the performance analysis method provided in this application, and the quantity may be a natural number. The "running duration" indicates duration in which any target thread is in a running state in each calculation interval. The "equivalent computational power" indicates a value of an equivalent computational power corresponding to a CPU frequency at which the running target task is executed in each calculation interval, namely, a magnitude of the equivalent computational power.

For the example shown in FIG. 3, the running duration may be an accumulated value of time periods of calculation intervals in which the target thread is in the running state. A task load calculation result corresponding to the foregoing formula (1) may be: 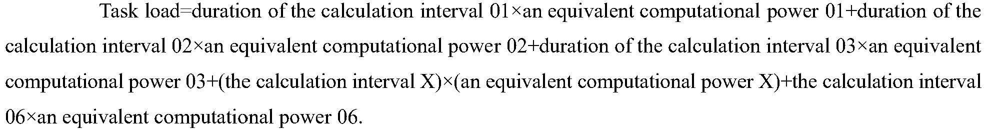 Task load=duration of the calculation interval 01×an equivalent computational power 01+duration of the calculation interval 02×an equivalent computational power 02+duration of the calculation interval 03×an equivalent computational power 03+(the calculation interval X)×(an equivalent computational power X)+the calculation interval 06×an equivalent computational power 06.

The equivalent computational power 01, the equivalent computational power 02, the equivalent computational power 03, the equivalent computational power X, and the equivalent computational power 06 are respectively values of the equivalent computational powers corresponding to the CPU operating at corresponding frequencies in the corresponding calculation intervals.

It may be understood that, in the electronic device that implements the performance analysis method provided in this application, values of equivalent computational powers of CPUs corresponding to various types and frequencies may be pre-stored. Refer to the example shown in FIG. 3. For CPUs of a same type, for example, small core CPUs (E-Core), a value of a corresponding equivalent computational power may be 152 when a frequency is 0.88 GHz; the value of the corresponding equivalent computational power may be 190 when the frequency is 0.96 GHz; the value of the corresponding equivalent computational power may be 223 when the frequency is 1.03 GHz; the value of the corresponding equivalent computational power may be 250 when the frequency is 1.13 GHz; and the value of the corresponding equivalent computational power may be 303 when the frequency is 1.22 GHz. The equivalent computational power 01, the equivalent computational power 02, the equivalent computational power 03, the equivalent computational power X, and the equivalent computational power 06 may be any value of the equivalent computational power in the foregoing example or another corresponding value of the equivalent computational power. This is not limited herein. Details are not described again.

Therefore, according to the foregoing formula (1), the electronic device may obtain, through calculation, a task load corresponding to each target task, and may further accurately collect statistics on performance metrics such as the CPU load required for executing the target program. The CPU load may be used to measure performance of the target program, so as to guide a performance optimization direction and procedure of the target program. The CPU load may also be used to measure performance of each CPU running the target program. Therefore, the electronic device can also be guided to optimize, for example, balance between the CPU computational power and device power consumption by adjusting a CPU operating frequency or in another manner.

In some other embodiments, the target program may also be run on a virtual machine, and the performance analysis tool, for example, the IDE, may also be run on a server or another electronic device having one or more processors. This is not limited herein.

In conclusion, the performance analysis method provided in this application is based on dynamic instrumentation, does not intrude into code of the target program, and does not require recompilation or modification of the code of the target program. In this way, the foregoing manner that is implemented based on dynamic instrumentation and in which the plurality of pieces of execution information during the execution of the target program are obtained in an associated manner during program running can greatly improve applicability flexibility of the performance analysis method, may be applicable to a scenario in which a target program that is being developed or has been developed implements service code optimization through performance analysis, and may also be applicable to a performance analysis scenario of CPUs of various types at various operating frequencies.

The following describes in detail a specific implementation procedure of the performance analysis method provided in this application with reference to specific embodiments and the accompanying drawings.

The following first describes in detail, with reference to Embodiment 1, a specific implementation procedure of the performance analysis method provided in this application implemented on a single electronic device.

### Embodiment 1

The performance analysis method provided in embodiments of this application may be applied to a scenario in which an electronic device like the mobile phone 10 or the laptop computer 20 independently implements the performance analysis method.

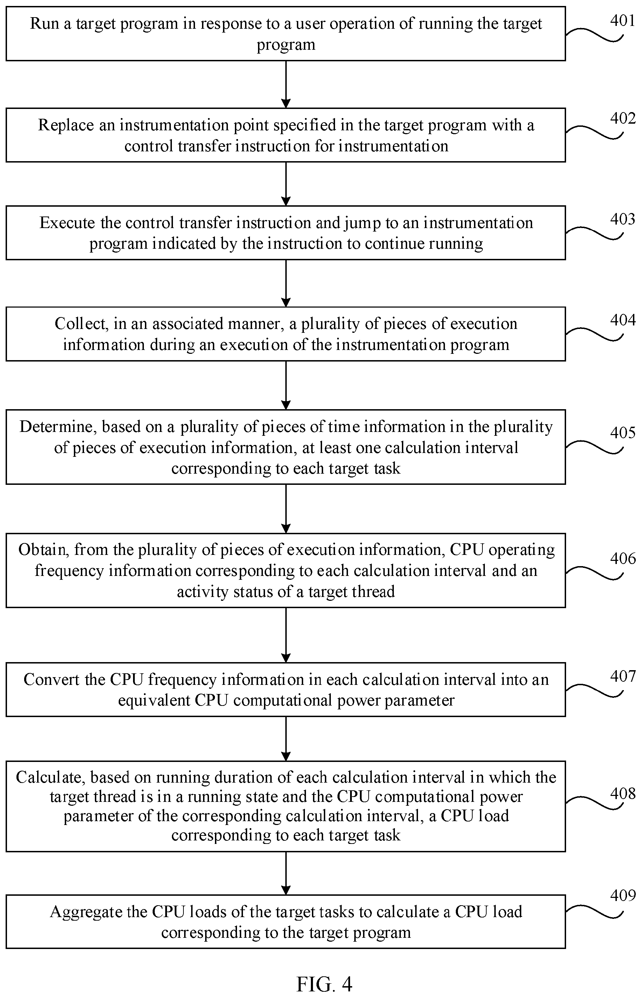

FIG. 4 is a diagram of an implementation procedure of a performance analysis method according to an embodiment of this application. It may be understood that steps in the implementation procedure may be performed by the mobile phone 10 or the laptop computer 20 in the performance analysis scenario shown in FIG. 1a(1) and FIG. 1a(2), or may be performed by another terminal device, for example, a tablet computer, in some other embodiments.

As shown in FIG. 4, the implementation procedure may include the following steps.

401: Run a target program in response to a user operation of running the target program.

For example, a developer may operate and run the target program on an interface of a related performance analysis tool run on the mobile phone 10 or the laptop computer 20. Correspondingly, the mobile phone 10 or the laptop computer 20 may execute the target program in response to the user operation. The developer may be a user of the performance analysis tool run on the mobile phone 10 or the laptop computer 20. For the interface, refer to a performance analysis interface displayed by the laptop computer 20 in the scenario shown in FIG. 1a(1) and FIG. 1a(2).

It may be understood that an interface of the performance analysis tool displayed by the mobile phone 10 may be of an interface style that adapts to a screen size of the mobile phone 10. In another embodiment, the interface of the performance analysis tool displayed by the laptop computer 20 may alternatively be different from the interface style shown in FIG. 1a(1) and FIG. 1a(2). This is not limited herein.

402: Replace an instrumentation point specified in the target program with a control transfer instruction for instrumentation.

For example, the target program may be any application installed on the mobile phone 10, or any software program installed on the laptop computer 20, or may be a test program that is deployed and installed by the developer on the mobile phone 10 or the laptop computer 20. This is not limited herein. The instrumentation point specified in the target program may be an instrumentation position specified by the developer by entering an instruction address or a function name corresponding to the instrumentation point after the to-be-analyzed target program is loaded into memory space, namely, the foregoing specified instrumentation point. It may be understood that the instrumentation point is usually an instrumentation position that is designed by the developer in the target program and that is replaced with a control transfer instruction based on an actual performance analysis requirement. A manner in which the developer designs the instrumentation point may be entering, into the performance analysis tool run on the electronic device, the instruction address or the function name that is used to locate the instrumentation position corresponding to the specified instrumentation point. The foregoing control transfer instruction for replacing the specified instrumentation point with, for example, a jump instruction, may be an instruction that does not affect code integrity of the target program. The control transfer instruction may trigger a jump to a specified program or specified code. After the jumped-to program or code is executed, execution may jump back to target program code following the control transfer instruction to continue execution.

In some embodiments, the mobile phone 10 or the laptop computer 20 may analyze CPU device performance of the mobile phone 10 or the laptop computer 20 by running the target program. For example, for a terminal device like the multi-core mobile phone 10 or laptop computer 20, load-handling capabilities and computing capabilities, code execution capabilities, or fault self-recovery capabilities of various types of CPUs with different core sizes included in the terminal device may be analyzed. In some other embodiments, the mobile phone 10 or the laptop computer 20 may analyze code performance of the program by running the target program, and an obtained performance analysis result may be used to guide the developer to optimize the code of the target program, that is, to perform program code optimization.

It may be understood that, for an implementation principle of replacing the specified instrumentation point with the control transfer instruction for instrumentation, refer to the implementation principle of the dynamic instrumentation technology shown in FIG. 2.

403: Execute the control transfer instruction and jump to an instrumentation program indicated by the instruction to continue running.

For example, in a procedure in which the code of the target program is run on each CPU of the mobile phone 10 or the laptop computer 20, when the CPU executes the control transfer instruction, a jump may be triggered to a specified program to continue to execute content of the program, for example, jump to the instrumentation program to continue to execute instrumentation content. The instrumentation program may be, for example, the instrumentation code X1 or the instrumentation code X2 shown in FIG. 2.

It may be understood that, after the jumped-to program indicated by the control transfer instruction is executed, a jump back may be triggered to a next piece of code of the target program to continue execution. In this way, the code of the target program can be kept complete, and a code execution procedure of the target program can also remain unaffected by the instrumentation code.

404: Collect, in an associated manner, a plurality of pieces of execution information in a procedure of running the instrumentation program.

For example, the instrumentation content of the instrumentation program may include a collection instruction or a collection function, for example, a hook function, for collecting the plurality of pieces of execution information. Based on the collection instruction or the collection function in the instrumentation program, the mobile phone 10 or the laptop computer 20 may synchronously collect the plurality of pieces of execution information during the code execution of the target program. In embodiments of this application, the plurality of pieces of execution information may include start time information and end time information of a target task, time information corresponding to a status switching moment of each target thread run by the target program, state information before and after switching, time information corresponding to a CPU frequency switching moment, frequency information before and after switching, and the like. In some other embodiments, the plurality of pieces of execution information may further include other information that can affect a level or a magnitude of an evaluation metric that is finally analyzed. This is not limited herein.

It may be understood that, because the plurality of pieces of execution information are collected in a same execution procedure, collection conditions of the information, for example, execution duration of the target tasks of the target program, duration of executing the target program on threads, and an activity status change, are consistent. Therefore, the plurality of pieces of execution information collected during the same execution are associated with each other. Performing comprehensive calculation based on the plurality of pieces of collected execution information can improve accuracy of a calculation result. For a specific calculation procedure, refer to descriptions in the following related steps. Details are not described herein.

405: Determine, based on a plurality of pieces of time information in the plurality of pieces of execution information, at least one calculation interval corresponding to each target task.

For example, the mobile phone 10 or the laptop computer 20 may comprehensively determine, based on the plurality of pieces of time information such as the start time information and the end time information of the target task, the time information corresponding to the status switching moment of the target thread, and the time information of the CPU frequency switching moment, the at least one calculation interval corresponding to the target task.

Refer to FIG. 3. A plurality of calculation intervals corresponding to the execution procedure of the target task, such as a calculation interval 01, a calculation interval 02, a calculation interval 03, a calculation interval 04, a calculation interval 05, and a calculation interval 06, may be determined by taking an intersection of a target task execution interval, a status switching moment corresponding to an activity status change of the target thread, and a frequency switching moment at which a frequency of the related CPU changes in a lifecycle of the target program. The calculation interval 01 may be a time period obtained through calculation based on start time information corresponding to a task start point and time information corresponding to a CPU frequency switching moment ①. The calculation interval 02 may be a time period obtained through calculation based on the time information corresponding to the CPU frequency switching moment ① and time information corresponding to a CPU frequency switching moment ②. The calculation interval 03 may be a time period obtained through calculation based on the time information corresponding to the CPU frequency switching moment ② and time information corresponding to a status switching moment ①. The calculation interval 04 may be a time period obtained through calculation based on time information corresponding to a CPU frequency switching moment ③ and time information corresponding to a frequency switching moment ④. The calculation interval 05 may be a time period obtained through calculation based on the time information corresponding to the CPU frequency switching moment ④ and time information corresponding to a status switching moment ③. The calculation interval 06 may be a time period obtained through calculation based on time information corresponding to a CPU frequency switching moment ⑤ and end time information corresponding to a task end point. Details are not described herein again.

It may be understood that one or more target tasks may be executed during the execution of the target program. The at least one calculation interval corresponding to each target task may be determined in the foregoing manner. Details are not described herein again.

406: Obtain, from the plurality of pieces of execution information, CPU operating frequency information corresponding to each calculation interval and an activity status of the target thread.

For example, the plurality of pieces of execution information obtained through collection during the execution of the target program further includes activity statuses of the target thread before and after status switching, for example, a running (running) state, a sleeping (sleeping) state, and a runnable (runnable) state. The target thread in the running state occupies CPU resources and contributes to a CPU load. In some other embodiments, the target thread in the runnable state may also occupy CPU resources and contribute to a CPU load. Therefore, in subsequent calculation of the CPU load, the performance analysis tool run on the mobile phone 10 or the laptop computer 20 may obtain the activity statuses of the target thread in the calculation intervals, and further identify duration of the running state, or identify duration of the running state and the runnable state.

In addition, the plurality of pieces of execution information further includes an operating frequency of the CPU in each calculation interval, namely, frequency information. In this case, the performance analysis tool run on the mobile phone 10 or the laptop computer 20 may obtain the frequency information.

407: Correspondingly convert the CPU operating frequency information in each calculation interval into an equivalent CPU computational power parameter.

For example, the CPU computational power parameter may include an equivalent computational power. Refer to the table of the mapping relationship between the operating frequency of the CPU and the equivalent computational power shown in FIG. 3, namely, the "CPU computational power table" shown in FIG. 3, the obtained CPU operating frequency information may be correspondingly converted into a value of the equivalent computational power. For example, when the frequency information is 0.88 GHz, the value of the equivalent computational power obtained through corresponding conversion is 152; when the frequency information is 0.96 GHz, the value of the equivalent computational power obtained through corresponding conversion is 190; when the frequency information is 1.03 GHz, the value of the equivalent computational power obtained through corresponding conversion is 223; when the frequency information is 1.13 GHz, the value of the equivalent computational power obtained through corresponding conversion is 250; and when the frequency information is 1.22 GHz, the value of the equivalent computational power obtained through corresponding conversion may be 303.

It may be understood that the "computational power table" shown in FIG. 3 may indicate a mapping relationship between frequency information and equivalent computational powers corresponding to CPUs of a same type, for example, a mapping relationship between different frequencies of small-core CPUs and corresponding equivalent computational powers. It can be seen from the mapping relationship that, for CPUs of a same type, a higher operating frequency of the CPU, namely, a higher CPU frequency, indicates a higher value of a corresponding equivalent computational power, namely, a larger equivalent computational power.

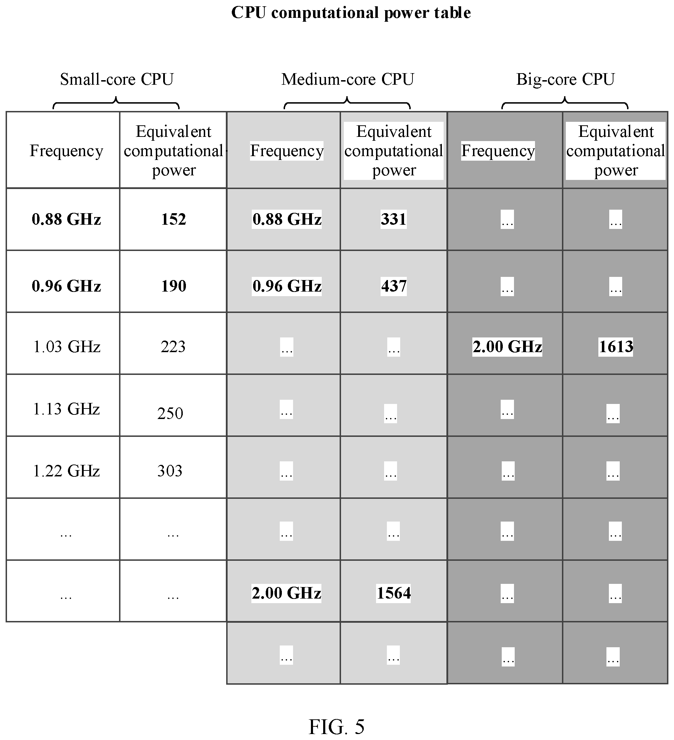

For a mapping relationship between frequency information and equivalent computational powers corresponding to CPUs of different types, refer to FIG. 5. When CPUs of different types operate at a same frequency, magnitudes of corresponding equivalent computational powers may be different. For example, in FIG. 5, when a small-core CPU operates at 0.88 GHz, a value of a corresponding equivalent computational power is 152, and when a medium-core CPU operates at 0.88 GHz, a value of a corresponding equivalent computational power may be 331. For another example, in FIG. 5, when a small-core CPU operates at 0.96 GHz, a value of a corresponding equivalent computational power is 190, and when a medium-core CPU operates at 0.96 GHz, a value of a corresponding equivalent computational power may be 437. For another example, when a medium-core CPU operates at 2.00 GHz, a value of a corresponding equivalent computational power is 1564, and when a large-core CPU operates at 2.00 GHz, a corresponding equivalent computational power may be 1613. These examples are not exhaustive. A computational power table shown in FIG. 5 may indicate a mapping relationship between frequencies of different types of CPUs and equivalent computational powers that is preset in the mobile phone 10 or the laptop computer 20. This is not limited herein.

408: Calculate, based on running duration of each calculation interval in which the target thread is in the running state and the CPU computational power parameter of the corresponding calculation interval, a CPU load corresponding to each target task.

For example, the performance analysis tool run on the mobile phone 10 or the laptop computer 20 may first determine a time period of each calculation interval and duration corresponding to the target thread in the running state and the like, and determine the running duration of each calculation interval. Then, according to the foregoing formula (1), the obtained running duration of each calculation interval and the value of the equivalent computational power of the CPU operating in the corresponding calculation interval are substituted into the formula (1) for calculation, and finally the CPU load corresponding to the corresponding target task may be calculated.

It may be understood that, in some other embodiments, the CPU load corresponding to each target task obtained through calculation may also be described as a task load of the target task, and represents an actual amount of CPU resources consumed during an execution of the target task.

409: Aggregate the CPU loads of the target tasks to calculate a CPU load corresponding to the target program.

As described above, the target program may include one or more target tasks. For example, when the target program includes one target task, the CPU load of the target task obtained through calculation is the CPU load of the target program. When the target program includes a plurality of target tasks, a sum of CPU loads of the plurality of target tasks obtained through calculation may be used as the CPU load of the target program. It may be understood that, in some other embodiments, the CPU load of the target program obtained through calculation may also be described as a task load of the target program, and represents an actual amount of CPU resources consumed during the execution of the target program.

It may be understood that the CPU load of the target task and/or the CPU load corresponding to the target program that are/is obtained through calculation may be presented on the performance analysis interface as the performance analysis result. A specific form in which the performance analysis result is presented is described below with reference to related accompanying drawings. Details are not described herein.

Based on the execution procedure of steps 401 to 409, according to the performance analysis method provided in this application, a plurality of pieces of execution information required for performance analysis can be synchronously collected during one execution of a target program. In addition, when performance analysis is performed based on the plurality of pieces of collected execution information, each calculation interval in which CPU resources are consumed can be accurately analyzed by combining a plurality of pieces of time information, and then a task load of a target task and/or a task load of a target program can be accurately calculated. In other words, accuracy of a performance analysis result is improved.

It may be understood that, in some other embodiments, the mobile phone 10 or the laptop computer 20 may perform the performance analysis method provided in this application, and may also analyze another evaluation metric based on a plurality of pieces of execution information collected during one execution of a target program, to analyze performance of the target program, CPU performance of an electronic device like the mobile phone 10, or the like. This is not limited herein.

### Embodiment 2

The performance analysis method provided in embodiments of this application may be applied to a scenario in which the mobile phone 10 and the laptop computer 20 or another electronic device are combined and interact with each other.

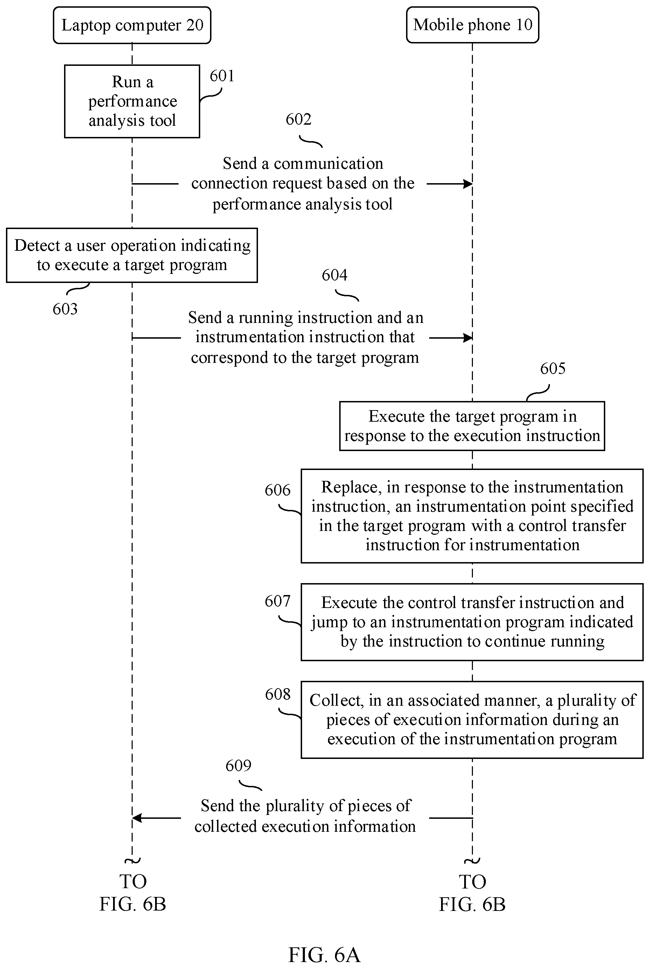

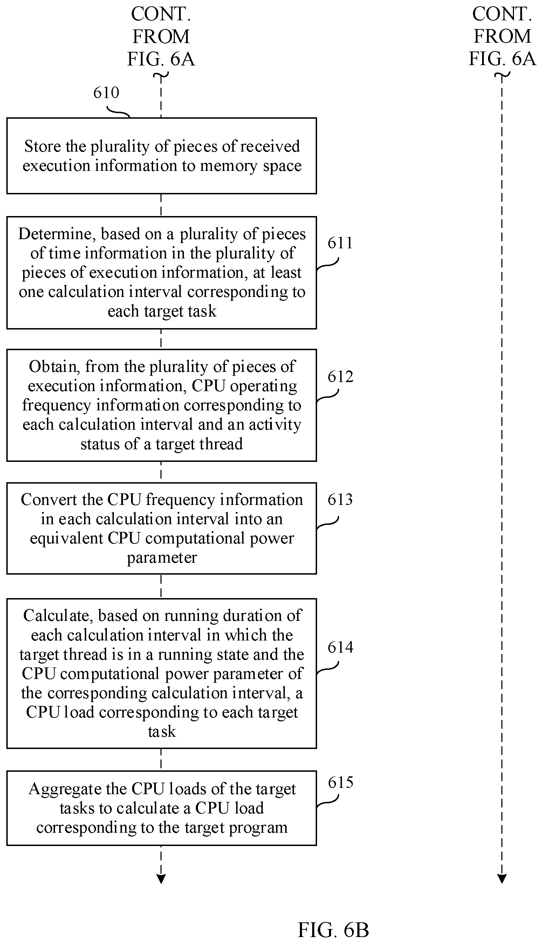

FIG. 6A and FIG. 6B are a diagram of an interaction procedure of a performance analysis method according to an embodiment of this application. It may be understood that, execution bodies in steps in the interaction procedure may include the mobile phone 10 and the laptop computer 20 in the scenario shown in FIG. 1a(1) and FIG. 1a(2), or may include other terminal devices such as a tablet computer, in some other embodiments.

As shown in FIG. 6A and FIG. 6B, the implementation procedure may include the following steps.

601: The laptop computer 20 runs a performance analysis tool.

For example, the laptop 20 may run the performance analysis tool in response to an operation of indicating, by a developer, to run the performance analysis tool, and display a performance analysis interface. For the performance analysis interface, refer to the interface in which the performance analysis result 101 is located in the scenario shown in FIG. 1a(1) and FIG. 1a(2). Details are not described herein again.

602: The laptop computer 20 sends a communication connection request based on the performance analysis tool.

For example, the developer may operate, on the performance analysis interface displayed by the laptop computer 20, to connect to an electronic device, for example, the mobile phone 10, on which a to-be-analyzed target program is installed. Before this, it may be understood that a wireless communication connection may be established in advance between the mobile phone 10 and the laptop computer 20, for example, a communication connection established in a wireless communication manner like based on Bluetooth (Bluetooth, BT), wireless fidelity (wireless fidelity, Wi-Fi), or a distributed soft bus. In some other implementation scenarios, the to-be-analyzed target program may be an application that is applicable to an operating system of an electronic device like a mobile phone. The developer may connect the mobile phone 10 to the laptop computer 20 in advance via a cable. The cable may be, for example, a communication cable with interfaces of a type like a universal serial bus (universal serial bus, USB) or a high definition multimedia interface (high definition multimedia interface, HDMI). This is not limited herein.

603: The laptop computer 20 detects a user operation indicating to execute the target program.

For example, the developer may tap a running control or the like on the performance analysis interface displayed by the laptop computer 20, to indicate to execute the target program. In this case, the laptop computer 20 may detect the user operation indicating to execute the target program, and may further continue to perform the following step 604, for example, send an execution instruction, in response to an operation of the developer, that is, in response to the user operation.

604: The laptop computer 20 sends, to the mobile phone 10, the execution instruction and an instrumentation instruction that correspond to the target program.

For example, the execution instruction is used to instruct the mobile phone 10 to execute the target program. The instrumentation instruction may be used to instruct the mobile phone 10 to replace a specified instrumentation point with a control transfer instruction in a procedure of running the target program. The instrumentation instruction may include information that describes the specified instrumentation point (or referred to as an instrumentation position) in a target program code file, information about adding a control transfer instruction to the running target program, information about an instrumentation program to which execution jumps, and the like. The instrumentation program may be, for example, the instrumentation code X1 or the instrumentation code X2 shown in FIG. 2. Details are not described herein again.

605: The mobile phone 10 runs the target program in response to the execution instruction.

606: The mobile phone 10 replaces, in response to the instrumentation instruction, the instrumentation point specified in the target program with the control transfer instruction for instrumentation.

For a specific execution procedure of replacing the specified instrumentation point with the control transfer instruction for instrumentation, refer to the related descriptions of step 402 in Embodiment 1. Details are not described herein again.

607: The mobile phone 10 executes to the control transfer instruction and jumps to the instrumentation program indicated by the instruction to continue running.

For a specific execution procedure of executing the instrumentation program according to the control transfer instruction, refer to the related descriptions of step 403 in Embodiment 1. Details are not described herein again.

608: The mobile phone 10 collects, in an associated manner, a plurality of pieces of execution information in a procedure of running the instrumentation program.

For example, the plurality of pieces of execution information may include start time information and end time information of a target task, time information corresponding to a status switching moment of each target thread run by the target program, state information before and after switching, time information corresponding to a CPU frequency switching moment, frequency information before and after switching, and the like.

For a specific execution procedure of collecting, in the associated manner, the plurality of pieces of execution information, refer to the related descriptions of step 404 in Embodiment 1. Details are not described herein again.

It may be understood that, in the procedure of collecting the plurality of pieces of execution information, the mobile phone 10 may store the execution information in real time, for example, store the execution information to memory space allocated by a system to the target program. Further, after collection is completed, the following step 609 may continue to be performed to send the plurality of pieces of collected execution information to the laptop computer 20. In some other embodiments, the mobile phone 10 may alternatively separately send, in real time, the plurality of pieces of execution information collected during the execution of the target program to the laptop computer 20. This is not limited herein.

609: The mobile phone 10 sends the plurality of pieces of collected execution information to the laptop computer 20.

For example, after information collection is completed, the mobile phone 10 may send the plurality of pieces of collected execution information to the laptop computer 20.

610: The laptop computer 20 stores the plurality of pieces of received execution information to memory space.

For example, the memory space may be storage space allocated by a system of the laptop computer 20 to the performance analysis tool. The memory space may be used to store the to-be-analyzed target program, or may be used to store a target program used to perform performance analysis on a CPU of an electronic device like the laptop computer 20. In embodiments of this application, the memory space may be used to store the plurality of pieces of received execution information collected by the mobile phone 10.

As described above, the plurality of pieces of execution information is program execution information synchronously collected in a procedure in which the mobile phone 10 runs the target program.

611: The laptop computer 20 determines, based on a plurality of pieces of time information in the plurality of pieces of execution information, at least one calculation interval corresponding to each target task.

612: The laptop computer 20 obtains, from the plurality of pieces of execution information, CPU operating frequency information corresponding to each calculation interval and an activity status of the target thread.

613: The laptop computer 20 converts the CPU frequency information in each calculation interval into an equivalent CPU computational power parameter.

614: The laptop computer 20 calculates, based on running duration of each calculation interval in which the target thread is in a running state and the CPU computational power parameter of the corresponding calculation interval, a CPU load corresponding to each target task.

615: The laptop computer 20 aggregates the CPU loads of the target tasks to calculate a CPU load corresponding to the target program.

For a specific execution procedure of step 611 to step 615, refer to the related descriptions of step 406 to step 409 in Embodiment 1. Details are not described herein again.

It may be understood that, in an application scenario in which two or more devices interact with each other to implement the performance analysis method provided in this application, an electronic device (for example, the mobile phone 10) executing a target program may be responsible for collecting a plurality of pieces of program execution information during one execution of the target program, to be used as original data for performance analysis. The execution information may be associated in terms of time or content. Another electronic device (for example, the laptop computer 20) running the performance analysis tool may comprehensively analyze and obtain a performance analysis result, for example, the CPU load or the task load of the target program, based on the associated execution information. In this way, accuracy of the performance analysis result can be improved.

In addition, according to the performance analysis methods provided in Embodiment 1 and Embodiment 2, in this application, instrumentation is performed by replacing a specified instrumentation point with a control transfer instruction during the execution of the target program, and the procedure of collecting the execution information is implemented. This dynamic instrumentation manner can effectively improve applicability and flexibility of the performance analysis method provided in this application. For example, the method is applicable to optimizing, through performance analysis, code of a target program under development, and applicable to performing a performance analysis test on a released target program to guide a subsequent program optimization strategy. For CPUs in the electronic device, the performance analysis method provided in this application may also support various types of CPUs with different core sizes in performing performance analysis such as analysis of computational powers or load-handling capabilities. In addition, the related performance analysis result may be used to guide the system of the electronic device to perform load adjustment in a procedure in which a CPU of the electronic device runs the target program. For details, refer to the following example descriptions with reference to related accompanying drawings. Details are not described herein.

FIG. 7 is a diagram of computational power-load analysis coordinates established based on a performance analysis result according to this application.

A scenario in which an electronic device executes a plurality of interface display tasks in a procedure of executing a plurality of target programs is used as an example. For example, a frame rate of the electronic device is 120 Hz, that is, 120 frames of interface images can be refreshed per second. In other words, the electronic device can complete, in 8.3 ms, a procedure of drawing, rendering, and displaying one frame of interface image. One or more target programs may be one or more applications or software programs currently run on the electronic device, for example, a plurality of applications run on the mobile phone 10, or a plurality of software programs run on the laptop computer 20.

Refer to FIG. 7. A horizontal coordinate of the computational power-load analysis coordinates is a load, namely, a size of a load correspondingly consumed by an interface display task corresponding to each target program currently executed by the electronic device. The load may be a value of a CPU load or a task load of the one or more target programs that is obtained through calculation according to the performance analysis method provided in this application.

Still refer to FIG. 7. A vertical coordinate of the computational power-load analysis coordinates is an average computational power, that is, a ratio of the load consumed by the interface display task of each target program currently executed by the electronic device to running duration of a related task thread. For the running duration, refer to a sum corresponding to the duration in which the target threads are in the running (running) state shown in FIG. 2. The average computational power may be obtained, for example, by dividing a sum of CPU loads corresponding to all interface display tasks obtained by the electronic device through calculation according to the performance analysis method in this application by total running duration obtained by summing the duration in which the target threads are in the running (running) state.

It may be understood that, more complex applications or software programs run by the electronic device in a same time period and/or lower program execution efficiency indicate a larger CPU computational power correspondingly consumed by interface display tasks corresponding to each target program.

Still refer to FIG. 7. A horizontal coordinate and a vertical coordinate of each coordinate point in the computational power-load analysis coordinate may correspond to a magnitude of a computational power and a size of a load of an interface display task of each frame of interface image that is completed in one second. It may be understood that, after a CPU configuration of the electronic device is determined, a balance can be pursued between a CPU computational power that can be provided by the electronic device and power consumption of the electronic device. It may be understood that, for the same load, if a high frequency is used for running, running duration is short. However, the high frequency usually results in poor energy efficiency and high power consumption overheads. Although running duration at a low frequency is long, energy efficiency is high, and power consumption overheads are low. Therefore, with reference to target allowable running duration, for example, 8.3 ms, when a task is exactly completed in 8.3 ms at a used frequency, it can be ensured that the task is completed on time, and power consumption overheads are minimized. With reference to the computational power-load analysis coordinate shown in FIG. 7, for a coordinate point on a 120 Hz computational power-power consumption balancing line, a balance can be achieved between a computational power that can be provided by the corresponding electronic device for a task corresponding to the coordinate point and corresponding power consumption.

Using the 120 Hz computational power-power consumption balancing line as a boundary, for each coordinate point on the left side of the computational power-power consumption balancing line, a relationship between a computational power that can be provided by the corresponding electronic device for the task and the power consumption of the electronic device may be maintained in a state in which the supply exceeds the demand. In this case, the computational power supply and the power consumption of the electronic device can be balanced by adjusting an operating frequency of a CPU of the electronic device, that is, switching the frequency. Still refer to FIG. 7. In this state, the electronic device may be in a condition of computational power undersupply or oversupply.

For example, for a coordinate point in the undersupply area shown in FIG. 7, corresponding task execution time is greater than target time, indicating that the CPU computational power supply is less than a CPU load at this time. In this case, the CPU computational power supply may be increased by increasing the operating frequency of the CPU, that is, enabling the corresponding CPU to operate at a higher frequency, thereby shortening the task execution time, and finally enabling a target task to be completed within the target time. In some other embodiments, the CPU load may alternatively be reduced by reducing program logic complexity or improving algorithm efficiency, so that the target task can be completed within the target time. The target time may be execution duration that is set by a developer of application code/kernel code for the target task based on a performance optimization objective.

For another example, for a coordinate point in the oversupply area shown in FIG. 7, corresponding task execution time is less than target time, indicating that the CPU computational power supply is greater than a CPU load at this time. In this case, the CPU computational power supply can be reduced by reducing the operating frequency of the CPU, that is, enabling the corresponding CPU to operate at a lower frequency. It may be understood that the lower frequency helps improve energy efficiency or reduce power consumption. In other words, for the coordinate point in the oversupply area, consideration is mainly given to how to obtain a high power consumption gain.

Still refer to FIG. 7. For each coordinate point on the right side of a 120 Hz maximum load line, that is, for each coordinate point in an overloaded area, the corresponding CPU operating frequency cannot be further increased, that is, the CPU computational power supply cannot be further increased. In this case, to resolve a problem of completing execution of the target task within the target time, a load may be reduced by optimizing the program code, for example, by reducing the program logic complexity or improving the algorithm efficiency, so that the target task can be completed within the target time.

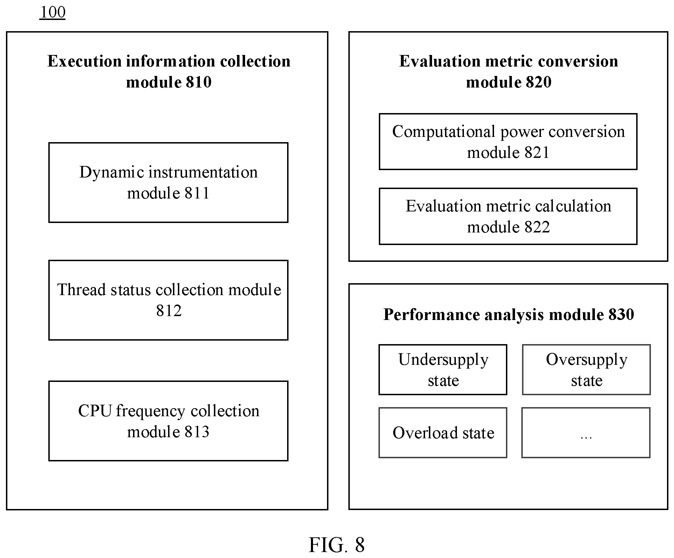

FIG. 8 is a diagram of a software structure of a performance analysis tool according to an embodiment of this application. In embodiments of this application, the performance analysis tool may be deployed and installed on an electronic device like the mobile phone 10 and/or the laptop computer 20. In some other embodiments, the performance analysis tool may also be deployed and installed on another electronic device that needs to execute a performance analysis task, for example, a tablet computer. This is not limited herein.

As shown in FIG. 8, the system software structure of the electronic device 100 may include an execution information collection module 810, an evaluation metric conversion module 820, and a performance analysis module 830.

The execution information collection module 810 is configured to collect a plurality of pieces of execution information in an execution procedure of a target program. In embodiments of this application, the execution information collection module 810 may include a dynamic instrumentation module 811, a thread status collection module 812, and a CPU frequency collection module 813.

The dynamic instrumentation module 811 is configured to: obtain an instruction address or a function name corresponding to a specified instrumentation point that is entered by a developer, and replace the specified instrumentation point with a control transfer instruction during the execution of the target program. As described above, the control transfer instruction may be used to jump to instrumentation code specified by the developer to continue execution, so as to collect information such as system time corresponding to the instrumentation point. The specified instrumentation point may be in code of the target program, or may be in application code/kernel code. The application code/kernel code may be code correspondingly executed by a system process or thread that needs to be invoked during the execution of the target program.

The thread status collection module 812 is configured to collect, in real time during the execution of the target program, related information of an activity status change of an execution thread (which may also be referred to as a target thread) corresponding to each target task of the target program, including time information corresponding to a status switching moment of each target thread, state information before and after switching, and the like. For details, refer to the related descriptions shown in FIG. 2, FIG. 3, and the like. Details are not described herein again.

The CPU frequency collection module 813 is configured to collect, in real time during the execution of the target program, related information of an operating frequency change of each CPU that executes task code, including time information corresponding to a CPU frequency switching moment, frequency information before and after switching, and the like. For details, refer to the related descriptions in FIG. 3 and the like. Details are not described herein again.

The evaluation metric conversion module 820 may include a computational power conversion module 821, an evaluation metric calculation module 822, and the like.

The computational power conversion module 821 is configured to convert the collected CPU frequency information into a corresponding equivalent computational power. As described above, a magnitude of the equivalent computational power may be determined based on a current operating frequency (namely, a frequency) of the CPU and a type of the CPU. For details, refer to FIG. 5 and the related descriptions. Details are not described herein again.

The evaluation metric calculation module 822 is configured to calculate values of related evaluation metric parameters based on the collected execution information, that is, convert the program execution information into related performance metrics. For example, the evaluation metric calculation module 822 may determine, based on the collected time information, at least one calculation interval corresponding to each target task, and calculate, in combination with the equivalent computational power obtained by converting the related CPU by the computational power conversion module 821, a CPU load in an execution procedure of each target task and a comprehensive CPU load of the target program. In embodiments of this application, the CPU load is a task load.

The performance analysis module 830 is configured to: measure performance of the target program based on the performance metrics obtained through calculation, for example, the CPU load corresponding to each target task or each target program, analyze CPU load balancing performance of the electronic device, or the like. In embodiments of this application, an analysis result of the CPU load balancing performance may be reflected in the computational power-load analysis coordinates shown in FIG. 7. In some other embodiments, the analysis result may alternatively be presented in another form of the performance analysis result. This is not limited herein.

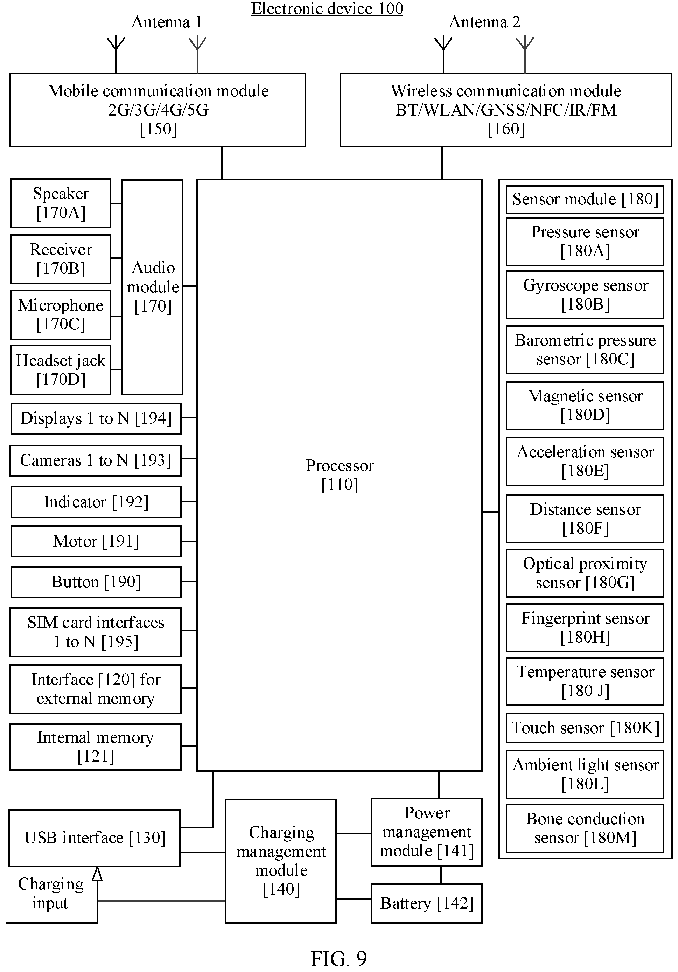

FIG. 9 is a diagram of a hardware structure of an electronic device according to an embodiment of this application. It may be understood that the electronic device may be the mobile phone 10, the laptop computer 20, or another electronic device. This is not limited herein.

The electronic device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in embodiments of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent devices, or may be integrated into one or more processors.

The controller may generate an operation control signal based on an instruction operation code and a time sequence signal, to complete control of instruction reading and instruction execution.

In embodiments of this application, the processor 110 of the electronic device 100 may control instruction reading and instruction execution by using the controller, to implement the steps in the procedure shown in FIG. 4 in Embodiment 1 or the steps shown in FIG. 6A and FIG. 6B in Embodiment 2, thereby implementing the performance analysis method provided in this application. For a specific implementation procedure, refer to the related descriptions in Embodiment 1 and Embodiment 2. Details are not described herein again.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor 110 may directly invoke the instructions or the data from the foregoing memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a SIM card interface, a universal serial bus (universal serial bus, USB) interface, and/or the like.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to: transmit and receive an electromagnetic wave signal. Each antenna in the electronic device 100 may be configured to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

The mobile communication module 150 may provide a wireless communication solution that includes 2G/3G/4G/5G or the like and that is applied to the electronic device 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more devices integrating at least one communication processor module. The wireless communication module 160 receives an electromagnetic wave through the antenna 2, performs frequency modulation and filtering on the electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information. The electronic device 100 may implement an image shooting function through the ISP, the camera 193, the video codec, the GPU, the display 194, the application processor, and the like.

The camera 193 is configured to capture a static image or a video. An optical image of an object is generated through a lens, and is projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the electronic device 100 may include one or N cameras 193, where N is a positive integer greater than 1.

The interface 120 for external memory may be used to connect to an external storage card, for example, a micro SD card, to extend a storage capability of the electronic device 100. The external storage card communicates with the processor 110 through the interface 120 for external memory, to implement a data storage function. For example, files such as music and videos are stored in the external storage card.

The internal memory 121 may be configured to store computer-executable program code, and the executable program code includes instructions. The internal memory 121 may include a program storage area and a data storage area. In addition, the internal memory 121 may include a high-speed random access memory, or may include a non-volatile memory, for example, at least one magnetic disk storage device, a flash memory device, or a universal flash storage (universal flash storage, UFS). The processor 110 runs the instructions stored in the internal memory 121 and/or the instructions stored in the memory disposed in the processor, to perform various function applications and data processing of the electronic device 100.

The electronic device 100 may implement an audio function, for example, music playing and recording, through the audio module 170, the speaker 170A, the receiver 170B, the microphone 170C, the headset jack 170D, the application processor, and the like.

The button 190 includes a power button, a volume button, and the like. The button 190 may be a mechanical button, or may be a touch-sensitive button. The electronic device 100 may receive a key input, and generate a key signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, time reminding, information receiving, an alarm clock, and a game) may also correspond to different vibration feedback effects. The touch vibration feedback effect may be further user-defined.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or of different types. The SIM card interface 195 may be compatible with different types of SIM cards. The SIM card interface 195 is also compatible with an external storage card. The electronic device 100 interacts with a network through the SIM card, to implement functions such as conversation and data communication. In some embodiments, the electronic device 100 uses an eSIM, namely, an embedded SIM card. The eSIM card may be embedded into the electronic device 100, and cannot be separated from the electronic device 100.

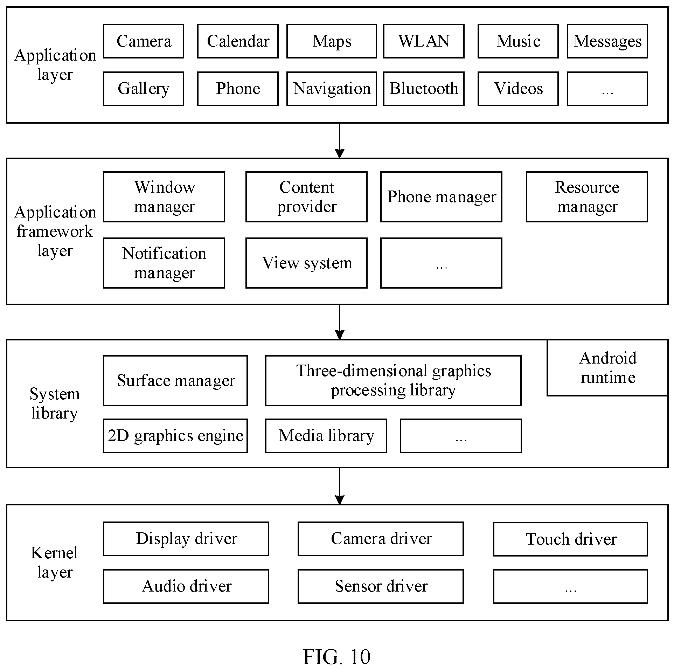

FIG. 10 is a diagram of a software structure of an operating system of an electronic device according to an embodiment of this application.

It may be understood that the operating system of the electronic device 100 may use a layered architecture, an event-driven architecture, a microkernel architecture, a micro service architecture, or a cloud architecture. In embodiments of this application, an Android system with a layered architecture is used as an example to describe the software structure of the system of the electronic device 100.

In the layered architecture, software is divided into several layers, and each layer has a clear role and task. The layers communicate with each other through a software interface. In some embodiments, the Android^{™} system is divided into four layers: an application layer, an application framework layer, an Android^{™} runtime (Android^{™} runtime) and system library, and a kernel layer from top to bottom.

As shown in FIG. 10, the application layer may include a series of application packages. The application packages may include applications such as Camera, Gallery, Calendar, Phone, Maps, Navigation, WLAN, Bluetooth, Music, Videos, and Messages.

The application framework layer provides an application programming interface (application programming interface, API) and a programming framework for an application at the application layer. The application framework layer includes some predefined functions.

The application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like.

The content provider is configured to: store and obtain data, and enable the data to be accessed by an application. The data may include a video, an image, audio, calls that are made and received, a browsing history and a bookmark, a phone book, and the like.

The view system includes visual controls such as a control for displaying a text and a control for displaying an image. The view system may be configured to establish an application. A display interface may include one or more views. For example, a display interface including a notification icon of Messages may include a text display view and an image display view.

The phone manager is configured to provide a communication function for the electronic device 100, for example, management of a call status (including answering, declining, or the like).

The resource manager provides various resources such as a localized character string, an icon, an image, a layout file, and a video file for an application.

The notification manager enables an application to display notification information in the status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is prompted in the status bar, an alert tone is made, the electronic device vibrates, or an indicator blinks.

The Android^{TM} runtime includes a core library and a virtual machine. The Android^{TM} runtime is responsible for scheduling and management of the Android^{TM} system.

The core library includes two parts: a function that needs to be invoked in Java language and a core library of Android.

The application layer and the application framework layer run on the virtual machine. The virtual machine executes Java files of the application layer and the application framework layer as binary files. The virtual machine is configured to perform functions such as object lifecycle management, stack management, thread management, security and exception management, and garbage collection.

The system library may include a plurality of functional modules, for example, a surface manager (surface manager), a media library (media library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

An embodiment of this application further provides a computer program product, configured to implement the performance analysis method provided in the foregoing embodiments.

Embodiments of a mechanism disclosed in this application may be implemented in hardware, software, firmware, or a combination of these implementation methods. Embodiments of this application may be implemented as a computer program module or module code executed in a programmable system. The programmable system includes at least one processor, a storage system (including a volatile memory and a nonvolatile memory and/or a storage element), at least one input device, and at least one output device.

The computer program module or the module code may be used for instruction inputting, to perform functions described in this application and generate output information. The output information can be applied to one or more output devices in a known manner. For purposes of this application, a processing system includes any system having a processor, for example, a digital signal processor (digital signal processor, DSP), a microcontroller, an application-specific integrated circuit (application-specific integrated circuit, ASIC), or a microprocessor.

The module code may be implemented in a high-level modular language or an object-oriented programming language, to communicate with the processing system. The module code may alternatively be implemented in an assembly language or a machine language when necessary. The mechanisms described in this application are actually not limited to the scope of any particular programming language. In any case, the language may be a compiled language or an interpretive language.

In some cases, the disclosed embodiments may be implemented in hardware, firmware, software, or any combination thereof. The disclosed embodiments may alternatively be implemented as instructions that are carried or stored on one or more transitory or non-transitory machine-readable (for example, computer-readable) storage media and that may be read and executed by one or more processors. For example, the instructions may be distributed over a network or through another computer-readable medium. Therefore, the machine-readable medium may include any mechanism for storing or transmitting information in a machine (for example, a computer)-readable form. The machine-readable medium includes but is not limited to a floppy disk, a compact disc, an optical disc, a magnetic optical disc, a read-only memory (read-only memory, ROM), a random access memory (random access memory, RAM), an erasable programmable read-only memory (erasable programmable read-only memory, EPROM), an electrically erasable programmable read-only memory (electrically erasable programmable read-only memory, EEPROM), a magnetic card, an optical card, a flash memory, or a tangible machine-readable memory used to transmit information (for example, a carrier, an infrared signal, or a digital signal) by using a propagating signal in an electrical, optical, acoustic, or another form over the internet. Therefore, the machine-readable medium includes any type of machine-readable medium that is suitable for storing or transmitting electronic instructions or information in a machine (for example, a computer)-readable form.

Reference to "one embodiment" or "an embodiment" in the specification means that specific features, structures, or characteristics described with reference to the embodiment are included in at least one example implementation solution or technology disclosed according to this embodiment of this application. The phrase "in one embodiment" appearing in various places in the specification does not necessarily all mean a same embodiment.

The disclosure of embodiments of this application further relates to an apparatus for performing operations in the text. The apparatus may be constructed dedicatedly for the required purpose or may include a general-purpose computer that is selectively activated or reconfigured by a computer program stored in the computer. Such a computer program may be stored on a computer-readable medium, such as but not limited to, any type of disk, including a floppy disk, an optical disc, a CD-ROM, a magneto-optical disk, a read-only memory (ROM), a random access memory (RAM), an EPROM, an EEPROM, a magnetic or optical card, an application-specific integrated circuit (ASIC), or any type of medium suitable for storing electronic instructions. In addition, each of them may be coupled to a computer system bus. Moreover, the computer mentioned in the specification may include a single processor or may be an architecture using a plurality of processors for increased computing capabilities.

In addition, the language used in the specification is already mainly selected for readability and instructional purposes and may not be selected to depict or limit the disclosed topics. Therefore, embodiments of this application are intended to describe but not to limit the scope of the concepts discussed in the specification.

## Claims

1. A performance analysis method, applied to an electronic device, wherein the method comprises:
detecting an analysis request that a user indicates to execute a first program to perform performance analysis; and
displaying a performance analysis result in response to the analysis request, wherein the performance analysis result is obtained based on execution information of the first program during a same execution, the execution information comprises at least a plurality of pieces of time information related to a first task of the first program, and the performance analysis result comprises a processor performance analysis result.

2. The method according to claim 1, wherein the electronic device comprises one or more CPUs, and the processor performance analysis result comprises a CPU performance analysis result; and
detecting the analysis request that the user indicates to execute the first program to perform performance analysis comprises:
detecting a first analysis request that the user indicates to execute the first program to perform performance analysis on the one or more CPUs; or
detecting a second analysis request of the user for performing performance analysis on the first program.

3. The method according to claim 2, wherein the first program comprises one or more tasks, the one or more tasks comprise the first task; and
displaying the performance analysis result in response to the analysis request comprises:
determining at least one calculation interval used to calculate a first task load, wherein the first task load is a CPU load generated corresponding to the first task, and the performance analysis result is related to the first task load;
determining duration corresponding to a calculation interval in which a first thread is in a run-related state in the at least one calculation interval, wherein the first thread is a thread that executes the first task;
obtaining a computational power parameter corresponding to an operating frequency of a CPU in each calculation interval; and
determining the first task load based on a quantity of the at least one calculation interval, the duration corresponding to the calculation interval in which the first thread is in the run-related state, and the computational power parameter corresponding to the operating frequency of the CPU in each calculation interval.

4. The method according to claim 3, wherein the plurality of pieces of time information related to the first task of the first program is used to determine start time and end time of each calculation interval; and
determining the at least one calculation interval used to calculate the first task load comprises:
obtaining start time information and end time information of the first task in the at least one task of the first program;
obtaining first time information corresponding to a switching moment of an activity status of the first thread in which the first task is located, wherein the activity status comprises the run-related state;
obtaining second time information corresponding to a switching moment of a frequency of a first CPU running the first thread; and
determining, based on the start time information, the end time information, the first time information, and the second time information, the at least one calculation interval used to calculate the first task load.

5. The method according to claim 4, wherein the execution information of the first program during the same execution further comprises activity status information of the first thread collected before and after the switching moment of the activity status; and
the run-related state comprises a running (running) state and/or a runnable (runnable) state.

6. The method according to claim 5, wherein determining the duration corresponding to the calculation interval in which the first thread is in the run-related state in the at least one calculation interval comprises:
determining first running duration corresponding to a first calculation interval in which the first thread is in the run-related state; and
determining a quantity of first calculation intervals in which the first thread is in the run-related state.

7. The method according to claim 6, wherein the execution information of the first program during the same execution further comprises frequency information of the first CPU collected before and after the switching moment of the frequency; and
obtaining the computational power parameter corresponding to the operating frequency of the CPU in each calculation interval comprises:
obtaining first frequency information of the first CPU operating in the first calculation interval;
determining a corresponding value of a first equivalent computational power based on a type of the first CPU and the first frequency information; and
determining the value of the first equivalent computational power as a computational power parameter corresponding to an operating frequency of the first CPU in the first calculation interval.

8. The method according to claim 7, wherein determining the first task load based on the quantity of the at least one calculation interval, the duration corresponding to the calculation interval in which the first thread is in the run-related state, and the computational power parameter corresponding to the operating frequency of the CPU in each calculation interval comprises:
calculating, based on the first running duration and the value of the first equivalent computational power, a first CPU load corresponding to the first calculation interval; and
performing cumulative calculation based on a first CPU load corresponding to each of one or more first calculation intervals in the at least one calculation interval, to obtain the first task load corresponding to the first task.

9. The method according to claim 8, wherein the one or more tasks further comprise a second task; and
displaying the performance analysis result in response to the analysis request further comprises:
determining at least one calculation interval used to calculate a second task load, wherein the second task load is a CPU load generated corresponding to the second task;
determining duration corresponding to a calculation interval in which a second thread is in a run-related state in the at least one calculation interval, wherein the second thread is a thread that executes the second task;
obtaining a computational power parameter corresponding to an operating frequency of a CPU in each calculation interval; and
determining the second task load based on a quantity of the at least one calculation interval, the duration corresponding to the calculation interval in which the second thread is in the run-related state, and the computational power parameter corresponding to the operating frequency of the CPU in each calculation interval.

10. The method according to claim 9, wherein displaying the performance analysis result in response to the analysis request comprises:
in response to the first analysis request, performing combined calculation on the first task load and the second task load to obtain a total load corresponding to one or more CPUs currently operating in the electronic device, determining the total load as the processor performance analysis result, and displaying the processor performance analysis result.

11. The method according to claim 9, wherein the performance analysis result comprises a first program performance analysis result; and
displaying the performance analysis result in response to the analysis request comprises:
in response to the second analysis request, generating the first program performance analysis result based on the first task load and the second task load, and displaying the first program performance analysis result.

12. The method according to any one of claims 3 to 11, wherein the start time information of the first task is obtained by collecting an execution result of a first instrumentation program, and the end time information of the first task is obtained by collecting an execution result of a second instrumentation program;
the electronic device executes the first instrumentation program according to a first control transfer instruction instrumented in the first program; and
the electronic device executes the second instrumentation program according to a second control transfer instruction instrumented in the first program.

13. The method according to any one of claims 3 to 11, wherein the first time information corresponding to the switching moment of the activity status of the first thread is obtained by collecting an execution result of a third instrumentation program; and
the electronic device executes the third instrumentation program according to a third control transfer instruction instrumented in application code/kernel code used to monitor the activity status of the first thread.

14. The method according to any one of claims 4 to 11, wherein the second time information corresponding to the switching moment of the frequency of the first CPU is obtained by collecting an execution result of a fourth instrumentation program; and
the electronic device executes the fourth instrumentation program according to a fourth control transfer instruction in application code/kernel code that is capable of listening to a frequency switching event of the first CPU.

15. A performance analysis method, applied to a first electronic device and a second electronic device, wherein the method comprises:
detecting, by the first electronic device, an analysis request that a user indicates to execute a first program to perform performance analysis;
sending, by the first electronic device in response to the analysis request, an execution instruction corresponding to the first program to the second electronic device;
executing, by the second electronic device, the first program in response to the execution instruction; and
displaying, by the first electronic device, a performance analysis result based on execution information collected by the second electronic device during a same execution of the first program, wherein the performance analysis result is obtained based on the execution information of the first program during the same execution, the execution information comprises at least a plurality of pieces of time information related to a first task of the first program, and the performance analysis result comprises a processor performance analysis result.

16. The method according to claim 15, wherein the first program comprises one or more tasks, the one or more tasks comprise the first task; and
displaying, by the first electronic device, the performance analysis result based on the execution information collected by the second electronic device during the same execution of the first program comprises:
receiving, by the first electronic device, the execution information collected by the second electronic device, and determining, based on the execution information, at least one calculation interval used to calculate a first task load, wherein the first task load is a CPU load generated corresponding to the first task, and the performance analysis result is related to the first task load;
determining, by the first electronic device, duration corresponding to a calculation interval in which a first thread is in a run-related state in the at least one calculation interval, wherein the first thread is a thread that executes the first task;
obtaining, by the first electronic device, a computational power parameter corresponding to an operating frequency of a CPU in each calculation interval; and
determining, by the first electronic device, the first task load based on a quantity of the at least one calculation interval, the duration corresponding to the calculation interval in which the first thread is in the run-related state, and the computational power parameter corresponding to the operating frequency of the CPU in each calculation interval.

17. The method according to claim 16, wherein determining, by the first electronic device based on the execution information, the at least one calculation interval used to calculate the first task load comprises:
obtaining, by the first electronic device, start time information and end time information of the first task in the at least one task of the first program;
obtaining, by the first electronic device, first time information corresponding to a switching moment of an activity status of the first thread in which the first task is located, wherein the activity status comprises the run-related state;
obtaining, by the first electronic device, second time information corresponding to a switching moment of a frequency of a first CPU running the first thread, wherein the first CPU is any one of one or more CPUs of the second electronic device; and
determining, by the first electronic device based on the start time information, the end time information, the first time information, and the second time information, the at least one calculation interval used to calculate the first task load.

18. The method according to claim 17, wherein the execution information of the first program during the same execution further comprises activity status information of the first thread collected before and after the switching moment of the activity status; and
the run-related state comprises a running (running) state and/or a runnable (runnable) state.

19. The method according to claim 18, wherein determining, by the first electronic device, the duration corresponding to the calculation interval in which the first thread is in the run-related state in the at least one calculation interval comprises:
determining, by the first electronic device, first running duration corresponding to a first calculation interval in which the first thread is in the run-related state; and
determining, by the first electronic device, a quantity of first calculation intervals in which the first thread is in the run-related state.

20. The method according to claim 19, wherein the execution information of the first program during the same execution further comprises frequency information of the first CPU collected before and after the switching moment of the frequency; and
obtaining, by the first electronic device, the computational power parameter corresponding to the operating frequency of the CPU in each calculation interval comprises:
obtaining, by the first electronic device, first frequency information of the first CPU operating in the first calculation interval;
obtaining, by the first electronic device, a corresponding value of a first equivalent computational power based on a type of the first CPU and the first frequency information; and
determining, by the first electronic device, the value of the first equivalent computational power as a computational power parameter corresponding to an operating frequency of the first CPU in the first calculation interval.

21. The method according to claim 20, wherein determining, by the first electronic device, the first task load based on the quantity of the at least one calculation interval, the duration corresponding to the calculation interval in which the first thread is in the run-related state, and the computational power parameter corresponding to the operating frequency of the CPU in each calculation interval comprises:
calculating, by the first electronic device based on the first running duration and the value of the first equivalent computational power, a first CPU load corresponding to the first calculation interval; and
performing, by the first electronic device, cumulative calculation based on a first CPU load corresponding to each of one or more first calculation intervals in the at least one calculation interval, to obtain the first task load corresponding to the first task.

22. The method according to claim 21, wherein the one or more tasks further comprise a second task; and
displaying, by the first electronic device, the performance analysis result based on the execution information collected by the second electronic device during the same execution of the first program comprises:
determining, by the first electronic device, at least one calculation interval used to calculate a second task load, wherein the second task load is a CPU load generated corresponding to the second task;
determining, by the first electronic device, duration corresponding to a calculation interval in which a second thread is in a run-related state in the at least one calculation interval, wherein the second thread is a thread that executes the second task;
obtaining, by the first electronic device, the computational power parameter corresponding to the operating frequency of the CPU in each calculation interval;
determining, by the first electronic device, the second task load based on a quantity of the at least one calculation interval, the duration corresponding to the calculation interval in which the second thread is in the run-related state, and the computational power parameter corresponding to the operating frequency of the CPU in each calculation interval; and
generating, by the first electronic device, the performance analysis result based on the first task load and the second task load, and displaying the performance analysis result.

23. A performance analysis result application method, applied to an electronic device, wherein the electronic device comprises a performance analysis tool, the performance analysis tool is configured to perform the performance analysis method according to any one of claims 1 to 14 to obtain a performance analysis result, and the performance analysis result comprises a CPU load analysis result corresponding to each of a plurality of programs running in a first time period; and
the method comprises:
establishing a first coordinate system, wherein a horizontal axis of the first coordinate system represents a task load, and a vertical axis of the first coordinate system represents a CPU computational power;
determining a first reference line in the first coordinate system based on a maximum value of a screen frame rate of the electronic device, wherein a task load corresponding to a coordinate point on the first reference line and the CPU computational power provided by the electronic device meet a first balancing condition, and the first balancing condition is used to control the CPU computational power provided by the electronic device and power consumption of the electronic device to reach a balanced state; and
determining a program optimization strategy for the plurality of programs based on a position relationship between a plotted point, in the first coordinate system, of the CPU load analysis result corresponding to each of the plurality of programs and the first reference line.

24. The application method according to claim 23, wherein the method further comprises:
determining a second reference line in the first coordinate system based on a maximum value of a task load that is supportable by the CPU computational power provided by the electronic device, wherein a task load corresponding to a coordinate point on the second reference line and the CPU computational power provided by the electronic device meet a second balancing condition, and the second balancing condition is used to control the CPU computational power provided by the electronic device and the maximum load that is supportable by the electronic device to reach a balanced state; and
determining a program optimization strategy for the plurality of programs based on a position relationship between the plotted point, in the first coordinate system, of the CPU load analysis result corresponding to each of the plurality of programs and the second reference line.

25. The application method according to claim 23 or 24, wherein the program optimization strategy for the plurality of programs comprises at least one of the following:
increasing operating frequencies of one or more CPUs executing a first program in the plurality of programs;
decreasing the operating frequencies of the one or more CPUs running the first program in the plurality of programs;
reducing program code logic complexity of the first program in the plurality of programs; and
performing optimization on an algorithm related to the first program in the plurality of programs.

26. An electronic device, comprising one or more processors and one or more memories, wherein the one or more memories store one or more programs, and when the one or more programs are executed by the one or more processors, the electronic device is enabled to perform the performance analysis method according to any one of claims 1 to 14, or perform the performance analysis result application method according to any one of claims 23 to 25.

27. A computer-readable medium, wherein the readable medium stores instructions, and when the instructions are executed on a computer, the computer is enabled to perform the performance analysis method according to any one of claims 1 to 14, or perform the performance analysis result application method according to any one of claims 23 to 25.

28. A computer program product, comprising a computer program/instructions, wherein when the computer program/instructions are executed by a processor, the performance analysis method according to any one of claims 1 to 14 is implemented, or the performance analysis result application method according to any one of claims 23 to 25 is performed.
